# EUROPÄISCHE PATENTSCHRIFT

(11) **EP 3 682 305 B1**
(45) Veröffentlichungstag und Bekanntmachung des Hinweises auf die Patenterteilung: **12.04.2023**
(21) Anmeldenummer: 18769346.0
(22) Anmeldetag: 12.09.2018
(51) Int. Cl.: G05D 1/02, A47L 11/40

(54) **EXPLORATION EINER UNBEKANNTEN UMGEBUNG DURCH EINEN AUTONOMEN MOBILEN ROBOTER**
EXPLORATION OF AN UNKNOWN ENVIRONMENT BY AN AUTONOMOUS MOBILE ROBOT
EXPLORATION D'UN ENVIRONNEMENT INCONNU À L'AIDE D'UN ROBOT MOBILE AUTONOME

(30) Priorität: 12.09.2017 DE 102017121128
(43) Veröffentlichungstag der Anmeldung: 22.07.2020
(73) Patentinhaber: Robart GmbH, 4020 Linz (AT)
(72) Erfinder: ARTES, Harold, 4020 Linz (AT); SEETHALER, Dominik, 4020 Linz (AT)
(74) Vertreter: Westphal, Mussgnug & Partner, Patentanwälte mbB
(86) Internationale Anmeldenummer: PCT/EP2018/074607
(87) Internationale Veröffentlichungsnummer: WO 2019/053062

(56) Entgegenhaltungen:
- EP-A1- 3 184 013
- EP-A2- 2 407 847
- DE-A1-102015 119 501
- US-A1- 2005 212 680
- US-A1- 2015 212 520
- US-A1- 2015 223 659
- US-A1- 2016 297 072
- EDLINGER T ET AL: "EXPLORATION OF AN INDOOR-ENVIRONMENT BY AN AUTONOMOUS MOBILE ROBOT", PROCEEDINGS OF THE IEEE/RSJ/GI INTERNATIONAL CONFERENCE ON INTELLIGENT ROBOTS AND SYSTEMS: ADVANCED ROBOTICS AND THE REAL WORLD. MUNICH, SEPT. 12 - 16, 1994; [PROCEEDINGS OF THE INTERNATIONAL CONFERENCE ON INTELLIGENT ROBOTS AND SYSTEMS (IROS)], NEW, vol. 2, 12 September 1994 (1994-09-12), pages 1278-1284, XP000514641, ISBN: 978-0-7803-1934-9

## Beschreibung

### TECHNISCHES GEBIET

Die Beschreibung betrifft das Gebiet der autonomen mobilen Roboter, insbesondere Methoden zur Exploration einer für den autonomen mobilen Roboter noch unbekannten Umgebung in einem Robotereinsatzgebiet.

### HINERGRUND

Zahlreiche autonome mobile Roboter sind für verschiedenste private oder gewerbliche Anwendungen erhältlich, beispielsweise die Bearbeitung oder Reinigung von Bodenflächen, der Transport von Gegenständen oder die Inspektion einer Umgebung. Einfache Geräte kommen ohne die Erstellung und Nutzung einer Karte des Robotereinsatzgebiets aus, indem sie sich beispielsweise zufällig über eine zu reinigende Bodenfläche bewegen (vgl. z.B. Publikation EP 2287697 A2 von iRobot Corp.). Komplexere Roboter nutzen eine Karte des Robotereinsatzgebiets, welche sie selber erstellen oder in elektronischer Form zur Verfügung gestellt bekommen. Die Publikation US 2005/212680 A1 offenbart ein Kartierungsverfahren, in dem der Roboter sich in einem Raum befindet und sich von einem Unterbereich zu einem benachbarten Unterbereich des Raums bewegt. Die Publikationen US 2016/297072 A1 und EP 3 184 013 A1 offenbaren jeweils ein Verfahren zur Reinigung eines Robotergebiets, in dem das Robotergebiet in Teilgebiete aufgeteilt wird. Die Publikation US 2015/212520 A1 offenbart ein weiteres Verfahren zur Bearbeitung einer Oberfläche. EDLINGER T ET AL: "EXPLORATION OF AN INDOOR-ENVIRONMENT BY AN AUTONOMOUS MOBILE ROBOT" in PROCEEDINGS OF THE IEEE/RSJ/GI INTERNATIONAL CONFERENCE ON INTELLIGENT ROBOTS AND SYSTEMS: ADVANCED ROBOTICS AND THE REAL WORLD, Seiten 1278-1284, XP000514641, offenbart ein weiteres Verfahren zur Erkundung eines Robotereinsatzgebietes durch einen autonomen mobilen Roboter.

Bevor die Karte für eine Pfadplanung (und andere Zwecke) genutzt werden kann, muss der Roboter seine Umgebung in dem Robotereinsatzgebiet erkunden, um eine Karte zu erstellen. Es sind Methoden für die Exploration einer für den Roboter unbekannten Umgebung bekannt. Beispielsweise können Techniken wie z.B. die "simultane Lokalisierung und Kartenerstellung" (*Simultaneous Localization and Mapping,* SLAM) in einer Explorationsphase eines Robotereinsatzes verwendet werden. Die Erfinder haben sich die Aufgabe gestellt, den Vorgang der Exploration einer für den Roboter noch unbekannten Umgebung innerhalb eines Robotereinsatzgebiets zu verbessern.

Die oben genannte Aufgabe kann mit einem Verfahren gemäß Anspruch 1 sowie mit einer Robotersteuerung gemäß Anspruch 15 gelöst werden. Unterschiedliche Ausführungsbeispiele und Weiterentwicklungen sind Gegenstand der abhängigen Ansprüche.

### KURZE BESCHREIBUNG DER ZEICHNUNGEN

Verschiedene Ausführungsbeispiele werden nachfolgend anhand von Abbildungen näher erläutert. Die Darstellungen sind nicht zwangsläufig maßstabsgetreu und die Erfindung beschränkt sich nicht nur auf die dargestellten Aspekte. Vielmehr wird Wert darauf gelegt, die zugrunde liegenden Prinzipien darzustellen. In den Abbildungen zeigt:
Figur 1 illustriert einen autonomen mobilen Roboters in einem Robotereinsatzgebiet.
Figur 2 illustriert anhand eines Blockdiagramms exemplarisch den Aufbau eines autonomen mobilen Roboters.
Figur 3 zeigt eine von einem mobilen Roboter automatisiert erzeugte Karte seines Robotereinsatzgebietes (einer Wohnung) mit einer Vielzahl von Begrenzungslinien.
Figur 4 zeigt exemplarisch das Ergebnis eine automatisierten Aufteilung des Robotereinsatzgebietes in Teilgebiete.
Figur 5 illustriert anhand eines Flussdiagramms ein Beispiel eines Verfahrens zur vollständigen Exploration eines Robotereinsatzgebietes.
Figur 6 illustriert die Kartierung von Hindernissen durch den Roboter.
Figur 7 illustriert die Bewegung des Roboters durch ein zu erkundendes Einsatzgebiet.
Figuren 8-13 illustrieren schrittweise die Erkundung eines Robotereinsatzgebietes mit mehreren Zimmern.

### DETAILLIERTE BESCHREIBUNG

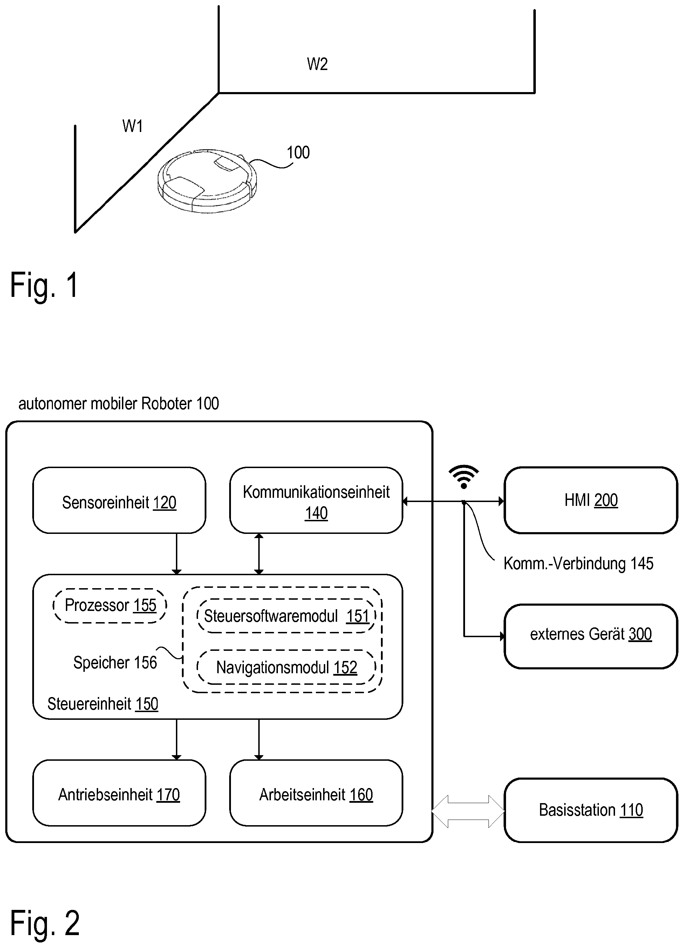

Fig. 1 illustriert exemplarisch einen Reinigungsroboter 100 als Beispiel für einen autonomen mobilen Roboter. Andere Beispiele für autonome mobile Roboter sind u.a. Serviceroboter, Überwachungsroboter, Telepräsenzroboter, etc. Moderne autonome mobile Roboter navigieren kartenbasiert, d.h. sie verfügen über eine elektronische Karte des Robotereinsatzgebietes. In manchen Situationen hat der Roboter jedoch keine oder keine aktuelle Karte des Robotereinsatzgebietes und er muss seine (ihm unbekannte) Umgebung erkunden und kartieren. Dieser Prozess wird auch als "Exploration" bezeichnet. Dabei detektiert der Roboter Hindernisse, während er sich durch das Robotereinsatzgebiet bewegt. In dem dargestellten Beispiel hat der Roboter 100 bereits Teile der Wände W1 und W2 eines Raumes erkannt. Verfahren zur Exploration der Umgebung eines autonomen mobilen Roboters sind an sich bekannt. Eine häufig eingesetzte Methode ist wie erwähnt SLAM.

Des Weiteren ist die Unterteilung der vom Roboter erstellten Karte in Teilgebiete an sich bekannt (vgl. z.B. DE 10 2010 017 689 A1). Dabei unterteilt der Roboter seine Karte anhand vorgegebener Kriterien wie z.B. mittels Sensoren detektierter Türdurchgänge, detektierter Bodenbeläge, etc. Zweck der Unterteilung des Robotereinsatzgebietes in mehrere Teilgebiete ist es, die Möglichkeit zu schaffen unterschiedliche Gebiete (z.B. Zimmer einer Wohnung) individuell zu behandeln. Im Falle eines Reinigungsroboters können unterschiedliche Teilgebiete z.B. unterschiedlich häufig, unterschiedlich intensiv, zu definierten Uhrzeiten, mit bestimmten Werkzeugen oder Reinigungsmitteln, etc. gereinigt werden. Solange der Roboter seine Umgebung nicht (im Wesentlichen vollständig erkundet hat, ist eine endgültige Aufteilung der Karte in Teilgebiete jedoch noch nicht möglich. Es existieren verschieden Strategien zur Exploration eines Robotereinsatzgebiets. Beispiele hierfür sind zufälliges Fahren, Fahrten entlang von Hindernissen (um insbesondere die Außenkontur abzufahren) bis hin zu komplexen Verfahren, die einen nächsten Explorationspunkt bestimmen, den der Roboter anfahren kann und hierbei einen maximalen Explorationsgewinn macht (vgl. z.B. D. Lee: The Map-Building and Exploration Strategies of a Simple Sonar-Equipped Mobile Robot (Cambridge University Press, 1996)). Jedoch gibt es kein Verfahren, dass die besonderen Gegebenheiten von Wohnumgebungen mit einzelnen Räumen berücksichtigt. Die Räume sind in der Regel durch Türdurchgänge verbunden und somit klar voneinander abgegrenzt. Gleichzeitig kann ein Raum zumindest aus Sicht des Roboters auf Grund der Einrichtung (Hindernisse) sehr komplex sein. Dies führt dazu, dass bei übliche Strategien zur Exploration der Roboter sehr oft zwischen den Räumen hin und her fährt, was viel Zeit und Energie kostet. Die zugrundeliegende Idee der Erfindung ist, einen Raum vollständig zu erkunden (zu explorieren) bevor der Roboter in den nächsten Raum wechselt. Hierzu führt der Roboter während der Exploration eine Aufteilung der Karte in Teilgebiete aus, um beispielsweise einen Raum als sinnvolles Teilgebiet zu erkenn. Der Roboter kann dieses Teilgebiet erkunden und feststellen, wann dieses Teilgebiet (und somit der Raum) vollständig erkundet ist.

Bevor auf die Exploration der Umgebung des Roboters genauer eingegangen wird, soll zunächst der Aufbau eines autonomen mobilen Roboters kurz beschrieben werden. Fig. 2 zeigt beispielhaft anhand eines Blockdiagrams verschiedene Einheiten (Module) eines autonomen mobilen Roboters 100. Eine Einheit bzw. ein Modul kann dabei eine eigenständige Baugruppe oder ein Teil einer Software zur Steuerung des Roboters sein. Eine Einheit kann mehrere Untereinheiten aufweisen. Die für das Verhalten des Roboters 100 zuständige Software kann von der Steuereinheit 150 des Roboters 100 ausgeführt werden. In dem dargestellten Beispiel beinhaltet die Steuereinheit 150 einen Prozessor 155, der dazu ausgebildet ist, in einem Speicher 156 enthaltene Software-Instruktionen auszuführen. Einige Funktionen der Steuereinheit 150 können zumindest teilweise auch mit Hilfe eines externen Rechners durchgeführt werden. Das heißt, die von der Steuereinheit 150 benötigte Rechenleistung kann zumindest teilweise auf einen externen Rechner ausgelagert sein, welcher beispielsweise über ein Heimnetzwerk oder über das Internet (Cloud) erreichbar sein kann.

Der autonome mobile Roboter 100 umfasst eine Antriebseinheit 170, welche beispielsweise Elektromotoren, Getriebe und Räder aufweisen kann, wodurch der Roboter 100 - zumindest theoretisch - jeden Punkt eines Einsatzgebiets anfahren kann. Die Antriebseinheit 170 ist dazu ausgebildet, von der Steuereinheit 150 empfangene Kommandos oder Signale in eine Bewegung des Roboters 100 umzusetzen

Der autonome mobile Roboter 100 umfasst des Weiteren eine Kommunikationseinheit 140, um eine Kommunikationsverbindung 145 zu einer Mensch-Maschine-Schnittstelle (HMI) 200 und/oder anderen externen Geräten 300 herzustellen. Die Kommunikationsverbindung 145 ist beispielsweise eine direkte drahtlose Verbindung (z. B. Bluetooth), eine lokale drahtlose Netzwerkverbindung (z. B. WLAN oder ZigBee) oder eine Internetverbindung (z. B. zu einem Cloud-Service). Die Mensch-Maschine-Schnittstelle 200 kann einem Nutzer Informationen über den autonomen mobilen Roboter 100 beispielsweise in visueller oder auch akustischer Form ausgeben (z. B. Batteriestatus, aktueller Arbeitsauftrag, Karteninformationen wie eine Reinigungskarte, etc.) und Nutzerkommandos für einen Arbeitsauftrag des autonomen mobilen Roboters 100 entgegennehmen. Beispiele für eine HMI200 sind Tablet-PC, Smartphone, Smartwatch und andere Wearables, Computer, Smart-TV, oder Head-Mounted Displays, usw. Eine HMI 200 kann zusätzlich oder alternativ direkt in den Roboter integriert sein, wodurch der Roboter 100 beispielsweise über Tasten, Gesten und/oder Sprachein- und -ausgabe bedient werden kann.

Beispiele für externe Geräte 300 sind Computer und Server, auf denen Berechnungen und/oder Daten ausgelagert werden, externe Sensoren, die zusätzliche Informationen liefern, oder andere Haushaltsgeräte (z.B. andere autonome mobile Roboter), mit denen der autonome mobile Roboter 100 zusammenarbeiten und/oder Informationen austauschen kann.

Der autonome mobile Roboter 100 kann eine Arbeitseinheit 160 aufweisen, wie beispielsweise eine Bearbeitungseinheit zur Bearbeitung einer Bodenfläche und insbesondere zur Reinigung einer Bodenfläche (z. B. Bürste, Saugvorrichtung) oder ein Greifarm zum Fassen und Transportieren von Gegenständen.

In einigen Fällen wie beispielsweise bei einem Telepräsenz-Roboter oder einem Überwachungsroboter wird eine andere Baueinheit zur Erfüllung der vorgesehenen Aufgaben genutzt und es ist keine Arbeitseinheit 160 notwendig. So kann ein Telepräsenz-Roboter eine mit der HMI gekoppelte Kommunikationseinheit 140 aufweisen, die beispielsweise mit einer Multimediaeinheit ausgestattet sein kann, welche z.B. Mikrofon, Kamera und Bildschirm umfasst, um die Kommunikation zwischen mehreren räumlich weit entfernten Personen zu ermöglichen. Ein Überwachungsroboter ermittelt auf Kontrollfahrten mit Hilfe seiner Sensoren ungewöhnliche Ereignisse (z. B. Feuer, Licht, unautorisierte Personen, etc.) und informiert beispielsweise eine Kontrollstelle hierüber. In diesem Fall ist statt der Arbeitseinheit 160 eine Überwachungseinheit mit Sensoren zur Überwachung des Robotereinsatzgebietes vorgesehen.

Der autonome mobile Roboter 100 umfasst eine Sensoreinheit 120 mit verschiedenen Sensoren, beispielsweise einen oder mehrere Sensoren zur Erfassung von Informationen über die Umgebung (*environment*) des Roboters in seinem Einsatzgebiet, wie z.B. die Position und Ausdehnung von Hindernissen oder anderen Landmarken (*landmarks*) im Einsatzgebiet. Sensoren zur Erfassung von Informationen über die Umgebung sind beispielsweise Sensoren zur Messung von Abständen zu Objekten (z.B. Wänden oder anderen Hindernissen, etc.) in der Umgebung des Roboters wie beispielsweise einen optischen und/oder akustischen Sensor, der mittels Triangulation oder Laufzeitmessung eines ausgesandten Signals Abstände messen kann (Triangulationssensor, 3D-Kamera, Laserscanner, Ultraschallsensoren, etc.). Alternativ oder zusätzlich kann eine Kamera genutzt werden, um Informationen über die Umgebung zu sammeln. Insbesondere bei Betrachtung eines Objekts von zwei oder mehr Positionen aus, kann ebenfalls die Position und Ausdehnung eines Objekts bestimmt werden.

Zusätzlich kann der Roboter Sensoren besitzen, um einen (zumeist unbeabsichtigten) Kontakt (bzw. Kollision) mit einem Hindernis zu detektieren. Dies kann durch Beschleunigungsmesser (die z.B. die Geschwindigkeitsänderung des Roboters bei einer Kollision detektieren), Kontaktschalter, kapazitive Sensoren oder andere taktile bzw. berührungsempfindliche Sensoren realisiert werden. Zusätzlich kann der Roboter Bodensensoren besitzen, um eine Kante im Boden, beispielsweise einer Treppenstufe, zu erkennen. Weitere übliche Sensoren im Bereich autonomer mobiler Roboter sind Sensoren zur Bestimmung der Geschwindigkeit und/oder des zurückgelegten Weges des Roboters wie z.B. O-dometer bzw. Inertialsensoren (Beschleunigungssensor, Drehratensensor) zur Bestimmung von Lage- und Bewegungsänderung des Roboters sowie Radkontaktschalter, um einen Kontakt zwischen Rad und Boden zu detektieren.

Der autonome mobile Roboter 100 kann einer Basisstation 110 zugeordnet sein, an welcher er beispielsweise seine Energiespeicher (Batterien) laden kann. Zu dieser Basisstation 110 kann der Roboter 100 nach Abschluss einer Aufgabe zurückkehren. Wenn der Roboter keine Aufgabe mehr zu bearbeiten hat, kann er in der Basisstation 110 auf einen neuen Einsatz warten.

Die Steuereinheit 150 kann dazu ausgebildet sein, alle Funktionen bereit zu stellen, die der Roboter benötigt, um sich selbstständig in seinem Einsatzgebiet zu bewegen und eine Aufgabe zu verrichten. Hierzu umfasst die Steuereinheit 150 beispielsweise den Prozessor 155 und das Speichermodul 156, um eine Software auszuführen. Die Steuereinheit 150 kann basierend auf den von der Sensoreinheit 120 und der Kommunikationseinheit 140 erhaltenen Informationen Steuerkommandos (z. B. Steuersignale) für die Arbeitseinheit 160 und die Antriebseinheit 170 erzeugen. Die Antriebseinheit 170 kann wie bereits erwähnt diese Steuersignale bzw. Steuerkommandos in eine Bewegung des Roboters umsetzen. Auch die in dem Speicher 156 enthaltene Software kann modular ausgebildet sein. Ein Navigationsmodul 152 stellt beispielsweise Funktionen zum automatischen Erstellen einer Karte des Robotereinsatzgebietes, sowie zur Bewegungsplanung des Roboters 100 bereit. Das Steuersoftwaremodul 151 stellt z.B. allgemeine (globale) Steuerfunktionen bereit und kann eine Schnittstelle zwischen den einzelnen Modulen bilden.

Damit der Roboter autonom eine Aufgabe (*task*) verrichten kann, kann die Steuereinheit 150 Funktionen zur Navigation des Roboters in seinem Einsatzgebiet umfassen, die von dem oben erwähnten Navigationsmodul 152 bereitgestellt werden. Diese Funktionen sind an sich bekannt und können unter anderem eine der folgenden umfassen:
- das Erstellen von (elektronischen) Karten durch Sammeln von Informationen über die Umgebung mit Hilfe der Sensoreinheit 120, beispielsweise aber nicht ausschließlich mittels SLAM-Verfahren,
- das Management von einer oder mehreren Karten zu einem oder mehreren den Karten zugeordneten Einsatzgebieten des Roboters,
- das Bestimmen der Position und Orientierung (Pose) des Roboters in einer Karte basierend auf den mit den Sensoren der Sensoreinheit 120 ermittelten Informationen der Umgebung,
- eine kartenbasierte Pfadplanung (Trajektorienplanung) von einer aktuellen Pose des Roboters (Startpunkt) zu einem Zielpunkt,
- ein Konturfolgemodus, in dem der Roboter (100) sich entlang der Kontur eines oder mehrerer Hindernisse (z.B. einer Wand) in einem im Wesentlichen konstanten Abstand d zur dieser Kontur bewegt,
- eine Teilgebietserkennung, bei der die Karte analysiert und in Teilgebiete zerlegt wird, wobei beispielsweise Raumgrenzen wie Wände und Türdurchgänge identifiziert werden, wodurch die Teilgebiete die Räume einer Wohnung und/oder sinnvolle Teilbereiche dieser Räume beschreiben.
Die Steuereinheit 150 kann mit Hilfe des Navigationsmoduls 152 und basierend auf den Informationen der Sensoreinheit 120 beispielsweise während des Betriebs des Roboters laufend eine Karte des Robotereinsatzgebietes aktualisieren z.B. wenn die Umgebung des Roboters sich verändert (Hindernis wird verschoben, Tür wird geöffnet, etc.). Eine aktuelle Karte kann dann von der Steuereinheit 150 zur kurz- und/oder langfristigen Bewegungsplanung für den Roboter verwendet werden. Als Planungshorizont wird jener Weg bezeichnet, den die Steuereinheit 150 eine (Soll-) Bewegung des Roboters vorherberechnet, bevor diese tatsächlich ausgeführt wird. Die hier beschriebenen Ausführungsbeispiele betreffen unter anderem verschiedene Ansätze und Strategien für die Bewegungsplanung in bestimmten Situationen, z.B. in Situationen, in denen bestimmte Manöver durch Hindernisse blockiert sind und daher nicht durchgeführt werden können.

Im Allgemeinen ist eine vom Roboter 100 verwendbare (elektronische) Karte eine Sammlung von Kartendaten (z.B. eine Datenbank) zur Speicherung von ortsbezogenen Informationen über ein Einsatzgebiet des Roboters und die für den Roboter relevante Umgebung in diesem Einsatzgebiet. In diesem Zusammenhang bedeutet "ortbezogen", dass die gespeicherten Informationen jeweils einer Position oder einer Pose in einer Karte zugeordnet sind. Eine Karte repräsentiert also eine Vielzahl von Datensätzen mit Kartendaten, und die Kartendaten können beliebige ortsbezogene Informationen enthalten. Hierbei können die ortsbezogenen Informationen in unterschiedlichen Detail- und Abstraktionsgrad gespeichert sein, wobei dieser an eine spezifische Funktion angepasst sein kann. Insbesondere können einzelne Informationen redundant gespeichert sein. Häufig wird eine Zusammenstellung mehrerer Karten, die das gleiche Gebiet betreffen, jedoch in unterschiedlicher Form (Datenstruktur) gespeichert sind, ebenfalls als "eine Karte" bezeichnet.

Ein technisches Gerät ist für einen menschlichen Nutzer im täglichen Leben am nützlichsten, wenn einerseits das Verhalten des Geräts für den Nutzer nachvollziehbar und verständlich ist und andererseits die Bedienung intuitiv möglich ist. Es ist in der Regel wünschenswert, dass ein autonomer mobiler Roboter (z.B. ein Bodenreinigungsroboter) ein für einen menschlichen Nutzer intuitiv nachvollziehbares und praktisches Verhalten an den Tag legt. Dazu muss der Roboter sein Einsatzgebiet durch technische Verfahren ähnlich interpretieren und in Teilgebiete aufteilen wie dies ein menschlicher Nutzer tun würde (z.B. Wohnzimmer, Schlafzimmer, Flur, Küche, Essbereich, etc.). Dies ermöglicht eine einfache Kommunikation zwischen Nutzer und Roboter, beispielsweise in Form einfacher Kommandos an den Roboter (z.B. "Reinige das Schlafzimmer") und/oder in Form von Benachrichtigungen an den Nutzer (z.B. "Reinigung des Schlafzimmers abgeschlossen"). Darüber hinaus können die erwähnten Teilgebiete für die Anzeige einer Karte des Robotereinsatzgebiets und die Bedienung des Roboters mittels dieser Karte genutzt werden.

Nun kann eine Aufteilung des Robotereinsatzgebiets in Teilgebiete durch einen Nutzer zum Einen nach anerkannten Konvention und zum Anderen nach persönlichen Vorlieben (und somit benutzerspezifisch, z.B. Essbereich, Kinderspielecke, etc.) vorgenommen werden. Ein Beispiel einer bekannten Konvention ist die Unterteilung einer Wohnung in verschiedene Zimmer wie z.B. Schlafzimmer, Wohnzimmer und Flur. Gemäß einer beispielhaften benutzerspezifischen Unterteilung könnte ein Wohnzimmer z.B. in einen Kochbereich, eine Essecke oder Bereiche vor und neben dem Sofa eingeteilt werden. Die Grenzen zwischen diesen Bereichen können mitunter sehr "unscharf" definiert sein und unterliegen im Allgemeinen der Interpretation des Nutzers. Ein Kochbereich könnte beispielsweise durch einen Fliesenboden gekennzeichnet sein, während der Essbereich lediglich durch die Anwesenheit eines Tisches mit Stühlen gekennzeichnet ist. Die Anpassung an den menschlichen Nutzer kann für einen Roboter eine sehr schwierige Aufgabe sein und häufig kann eine Roboter-Nutzer-Interaktion notwendig sein, um die Aufteilung des Robotereinsatzgebietes korrekt vorzunehmen. Um diese Roboter-Nutzer-Interaktion einfach und verständlich zu gestalten müssen die Kartendaten und die bereits automatisch vorgenommene Aufteilung vom Gerät interpretiert und aufbereitet werden. Des Weiteren erwartet sich der menschliche Nutzer ein an die vorgenommene Aufteilung angepasstes Verhalten des autonomen mobilen Roboters. Deshalb kann es gewünscht sein, dass die Teilgebiete vom Benutzer oder automatisch durch den Roboter mit Attributen versehen werden können, die das Verhalten des Roboters beeinflussen.

Eine technische Voraussetzung hierfür ist, dass der autonome mobile Roboter eine Karte seines Einsatzgebiets besitzt, um sich in diesem anhand der Karte zu orientieren. Diese Karte wird beispielsweise von dem Roboter selbsttätig aufgebaut und permanent gespeichert. Um das Ziel einer für den Nutzer intuitiven Aufteilung des Robotereinsatzgebiets zu erreichen, werden technische Verfahren benötigt, die (1) selbsttätig eine Aufteilung der Karte des Robotereinsatzgebiets wie beispielsweise einer Wohnung nach vorgegebenen Regeln vornehmen, (2) eine einfache Interaktion mit dem Benutzer zulassen, um sich den a-priori nicht bekannten Benutzerwünschen bei der Aufteilung anzupassen, (3) die automatisch generierte Aufteilung vorverarbeiten, um sie dem Benutzer einfach und verständlich in einer Karte darzustellen, und (4) aus der so erstellten Aufteilung möglichst selbsttätig gewisse Eigenschaften ableiten können, die geeignet sind, ein vom Nutzer erwartetes Verhalten zu erreichen.

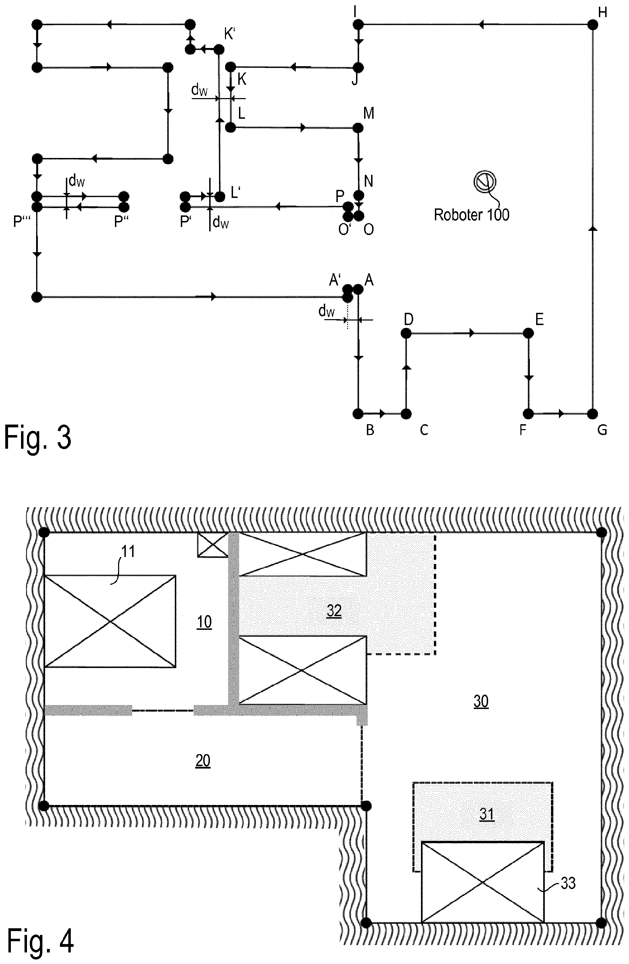

Figur 3 zeigt eine mögliche Darstellung einer Karte eines Robotereinsatzgebietes, wie sie vom Roboter, z.B. mittels Sensoren und eines SLAM-Algorithmus aufgebaut wird. Beispielsweise misst der Roboter mittels eines Abstandssensors den Abstand zu Hindernissen (z.B. eine Wand, ein Möbelstück, eine Tür, etc.) und berechnet aus den Messdaten (üblicherweise eine Punktwolke) Liniensegmente, welche die Grenzen seines Einsatzgebietes definieren. Das Einsatzgebiet des Roboters kann beispielsweise durch eine geschlossene Kette von Liniensegmenten (meist ein konkaver, einfacher Polygonzug) definiert werden, wobei jedes Liniensegment einen Startpunkt, einen Endpunkt und folglich auch eine Richtung aufweist. Die Richtung des Liniensegmentes zeigt an, welche Seite des Liniensegmentes ins Innere des Einsatzgebietes zeigt, bzw. von welcher Seite der Roboter das Hindernis, welches durch ein bestimmtes Liniensegment angezeigt wird, "gesehen" hat. Das in Fig. 3 dargestellte Polygon beschreibt für den Roboter das Einsatzgebiet vollständig, ist jedoch für eine Roboter-Nutzer-Kommunikation nur sehr schlecht geeignet. Ein menschlicher Nutzer wird unter Umständen Schwierigkeiten haben, seine eigene Wohnung wiederzuerkennen und sich darin zu orientieren. Eine Alternative zu der genannten Kette von Liniensegmenten ist eine Rasterkarte, bei der ein Raster von z.B. 10x10cm über das Robotereinsatzgebiet gelegt wird, und jede Zelle (d.h. 10×10cm-Box) markiert wird, sofern Sie von einem Hindernis belegt ist. Auch solche Rasterkarten sind für einen menschlichen Nutzer nur schwer interpretierbar.

Nicht nur um die Interaktion mit einem menschlichen Nutzer zu vereinfachen, sondern auch, um das Einsatzgebiet in (aus Sicht des Nutzers) sinnvollerweise "abzuarbeiten" soll der Roboter zunächst automatisiert sein Robotereinsatzgebiet in Teilgebiete unterteilen (also eine Teilgebietsdetektion durchführen). Eine solche Unterteilung in Teilgebiete ermöglicht dem Roboter, seine Aufgabe in seinem Einsatzgebiet leichter, systematischer, differenzierter, (aus Sicht des Nutzers) "logischer", etc. auszuführen und die Interaktion mit dem Nutzer zu verbessern. Um eine sinnvolle Unterteilung zu erhalten, muss der Roboter verschieden Sensordaten gegeneinander abwägen. Insbesondere kann er Informationen über die Befahrbarkeit (schwierig/leicht) eines Bereichs seines Einsatzgebietes nutzen, um ein Teilgebiet zu definieren. Des Weiteren kann der Roboter von der (widerlegbaren) Annahme ausgehen, dass Räume in der Regel rechteckig sind. Der Roboter kann lernen, dass einige Änderungen der Aufteilung zu sinnvolleren Ergebnissen führt (so dass z.B. bestimmte Hindernisse mit einer gewissen Wahrscheinlichkeit in einem bestimmten Teilgebiet liegen).

Wie in Fig. 3 dargestellt, ist ein Roboter üblicherweise in der Lage, Hindernisse mittels Sensoren (z.B. Laser-Abstandssensoren, Triangulations-Sensoren, Ultraschall-Abstandssensoren, Kollisionssensoren oder eine Kombination der genannten) zu erkennen und die Grenzen seines Einsatzgebietes in Form von Begrenzungslinien in einer Karte einzuzeichnen. Allerdings ermöglicht die beschränkte Sensorik eines Roboters im Allgemeinen kein eindeutiges Erkennen einer für einen menschlichen Nutzer selbstverständlichen Unterteilung des Einsatzgebietes in unterschiedliche Räume (z.B. Schlafzimmer, Wohnzimmer, Flur, etc). Selbst die Entscheidung, ob die in der Karte enthaltenen Begrenzungslinien (beispielsweise die Linie zwischen den Punkten J und K in Fig. 3) zu einer Wand oder zu einem Möbelstück gehören, ist nicht ohne weiteres automatisiert möglich. Auch die "Grenze" zwischen zwei Räumen ist für einen Roboter nicht ohne weiteres erkennbar.

Um die erwähnten Probleme zu lösen und eine Unterteilung des Robotereinsatzgebietes in unterschiedliche Teilgebiete (z.B. Zimmer) automatisiert zu ermöglichen, stellt der Roboter basierend auf den Sensordaten "Hypothesen" betreffend die Umgebung des Roboters auf, welche mittels unterschiedlicher Verfahren getestet werden. Kann eine Hypothese falsifiziert werden, wird sie verworfen. Sind zwei Begrenzungslinien (z.B. die Linien A-A' und O-O` in Fig. 3) annähernd parallel und in einem Abstand, der der üblichen lichten Breite (hierfür gibt es standardisierte Größen) eines Türdurchgangs entspricht, kann der Roboter die Hypothese "Türdurchgang" aufstellen und daraus schließen, dass dieser zwei unterschiedliche Zimmer trennt. Im einfachsten Fall kann eine automatisiert aufgestellte Hypothese getestet werden, indem der Roboter den Nutzer "befragt", d.h. Feedback des Nutzers einfordert. Der Nutzer kann die Hypothese dann entweder bestätigen oder verwerfen. Eine Hypothese kann jedoch automatisiert getestet werden, in dem die aus der Hypothese resultierenden Schlussfolgerungen im Hinblick auf Ihre Plausibilität geprüft werden. Wenn die vom Roboter erkannten Räume (z.B. mittels Erkennung der Türschwellen) einen zentralen Raum umfassen, der z.B. kleiner ist als ein Quadratmeter, ist die Hypothese, die letztendlich zu diesem kleinen zentralen Raum geführt hat, wahrscheinlich falsch. Ein weiterer automatisierter Test kann darin bestehen, zu prüfen, ob sich die aus zwei Hypothesen abgeleiteten Schlussfolgerungen widersprechen oder nicht. Wenn beispielsweise sechs Hypothesen betreffend eine Tür aufgestellt werden können und nur bei fünf vermeintlichen Türen kann der Roboter eine Türschwelle (eine kleine Stufe) detektieren, so kann dies ein Indiz dafür sein, dass die Hypothese betreffend die Tür ohne Türschwelle falsch ist.

Bei der Erstellung einer Hypothese durch den Roboter werden verschieden Sensormessungen kombiniert. Für einen Türdurchgang sind dies beispielsweise die Durchgangsbreite, Durchgangstiefe (gegeben durch Wanddicke), die Existenz einer Wand rechts und links des Durchgangs oder eine in den Raum ragende Tür. Diese Informationen können beispielsweise mit einem Abstandssensor durch den Roboter ermittelt werden. Mittels eines Beschleunigungssensors oder eines Lagesensors (z.B. ein gyroskopischer Sensor) kann eine möglicherweise vorhandene Türschwelle, welche der Roboter überfährt, detektiert werden. Durch Bildverarbeitung und eine Vermessung der Deckenhöhe können zusätzliche Informationen ermittelt werden.

Ein weiteres Beispiel für eine mögliche Hypothese ist der Verlauf von Wänden im Robotereinsatzgebiet. Diese sind unter anderem durch zwei parallele Linien gekennzeichnet, welche einen Abstand einer typischen Wanddicke (siehe Fig. 3, Dicke dw) haben und vom Roboter aus zwei entgegengesetzten Richtungen gesehen wurden (z.B. die Linien K-L und L`-K` in Fig. 3). Vor einer Wand können jedoch weitere Objekte (Hindernisse) wie beispielsweise Schränke, Regale, Blumentöpfe, etc., stehen, welche ebenfalls mit Hilfe von Hypothesen identifiziert werden können. Eine Hypothese kann auch auf einer anderen Hypothese beruhen. So ist beispielsweise eine Tür eine Unterbrechung einer Wand. Wenn also eine zuverlässige Hypothese über den Verlauf von Wänden im Einsatzgebiet des Roboters gemacht werden können, so können diese das Erkennen von Türen und somit die automatisierte Unterteilung des Robotereinsatzgebiets erleichtern.

Um Hypothesen zu testen und zu bewerten, kann ihnen ein Maß an Plausibilität zugeordnet werden. In einem einfachen Ausführungsbeispiel wird einer Hypothese für jede bestätigende Sensormessung ein vordefinierter Punktewert gutgeschrieben. Wenn auf diese Weise eine bestimmte Hypothese eine Mindestpunktzahl erreicht, so wird sie als plausibel angesehen. Eine negative Punktzahl könnte zum Verwerfen der Hypothese führen. In einem weiter entwickelten Ausführungsbeispiel wird einer bestimmten Hypothese eine Wahrscheinlichkeit für ihr zutreffen zugeordnet. Dies erfordert ein Wahrscheinlichkeitsmodel, welches Korrelationen zwischen verschiedenen Sensormessungen berücksichtigt, ermöglicht aber auch komplexe Wahrscheinlichkeitsaussagen mit Hilfe stochastischer Rechenmodelle und somit eine verlässlichere Vorhersage der Erwartungen des Benutzers. Beispielsweise können in gewissen Region (z.B. Ländern), in denen der Roboter zum Einsatz kommt, die Türbreiten standardisiert sein. Misst der Roboter eine solche standardisierte Breite, handelt es sich mit hoher Wahrscheinlichkeit um eine Tür. Abweichungen von den Standardbreiten reduzieren die Wahrscheinlichkeit, dass es sich um eine Tür handelt. Hierfür kann beispielsweise ein Wahrscheinlichkeitsmodell basierend auf einer Normalverteilung verwendet werden. Eine weitere Möglichkeit zur Erstellung und Bewertung von Hypothesen ist die Nutzung von "maschinellem Lernen", um geeignete Modelle und Maßfunktionen zu erstellen (siehe z.B. Trevor Hastie, Robert Tibshirani, Jerome Friedman: "*The Elements of Statistical Learning* ", 2. Auflage. Springer-Verlag, 2008). Hierzu werden beispielsweise Kartendaten in verschiedenen Wohnumgebungen durch einen oder mehr Roboter aufgenommen. Diese können dann mit Grundrissen oder durch einen Nutzer eingegebene Daten (z.B. betreffend den Verlauf von Wänden oder Türdurchgängen oder über eine gewünschte Aufteilung) ergänzt werden und von einem Lern-Algorithmus ausgewertet werden.

Eine weitere Methode, die alternativ oder zusätzlich zu der Verwendung der oben erläuterten Hypothesen verwendet werden kann, ist die Unterteilung eines Robotereinsatzgebietes (z.B. eine Wohnung) in mehrere rechteckige Bereiche (z.B. Zimmer). Dieser Ansatz basiert auf der Annahme, dass Zimmer in der Regel rechteckig sind oder aus mehreren Rechtecken zusammengesetzt werden können. In einer von einem Roboter erstellten Karte ist diese rechteckige Form der Zimmer im Allgemeinen nicht zu erkennen, da in den Zimmern zahlreiche Hindernisse mit komplexen Begrenzungen wie z.B. Möbel das Einsatzgebiet des Roboters einschränken.

Basierend auf der Annahme rechteckiger Zimmer wird das Robotereinsatzgebiet mit Rechtecken unterschiedlicher Größe überdeckt, welche die Zimmer wiedergeben sollen. Insbesondere werden die Rechtecke so gewählt, dass jedem für den Roboter zugänglichen Punkt in der Karte des Robotereinsatzgebiets eindeutig ein Rechteck zugeordnet werden kann. Das heißt, die Rechtecke überlappen sich in der Regel nicht. Dabei wird nicht ausgeschlossen, dass ein Rechteck Punkte enthält, die für den Roboter nicht zugänglich sind (z.B. weil Möbel die Zugänglichkeit ausschließen). Das durch die Rechtecke beschriebene Gebiet kann also größer und von geometrisch einfacherer Gestalt sein als das tatsächliche Robotereinsatzgebiet. Um die Orientierung und Größe der einzelnen Rechtecke zu bestimmen, werden beispielsweise lange gerade Begrenzungslinien in der Karte des Robotereinsatzgebiets genutzt, wie sie z.B. entlang von Wänden auftreten (siehe z.B. Fig. 3, Gerade durch die Punkte L' und K', Gerade durch die Punkte P und P' sowie P" und P‴). Zur Auswahl der zu verwendenden Begrenzungslinien werden verschiedene Kriterien verwendet. Ein Kriterium kann z.B. sein, dass die betreffenden Begrenzungslinien zu einer Vielzahl anderer Begrenzungslinien annähernd parallel oder orthogonal sind. Ein weiteres Kriterium kann sein, dass die betreffenden Begrenzungslinien annähernd auf einer Geraden liegen und/oder vergleichsweise (d.h. in der Größenordnung der Außenabmessungen des Robotereinsatzgebietes) lang sind. Andere Kriterien zur Wahl der Orientierung und Größe der Rechtecke sind beispielsweise erkannte Türdurchgänge oder Bodenbelagsgrenzen. Diese und andere Kriterien können zu ihrer Beurteilung in eine oder in mehreren Bewertungsfunktionen (analog zu dem Maß an Plausibilität einer Hypothese, z.B. dem Zuordnen eines Punktewertes für eine Hypothese) verwendet werden, um die konkrete Form und Lage der Rechtecke zu ermitteln. Beispielsweise werden den Begrenzungslinien Punkte für erfüllte Kriterien gegeben. Die Begrenzungslinie mit dem höchsten Punktwert wird als Grenze zwischen zwei Rechtecken genutzt.

Basierend auf der Annahme, dass Räume im Wesentlichen rechteckig sind, kann der Roboter aus der Karte der Begrenzungslinien (siehe Fig. 3) die äußersten Begrenzungslinien zu einem rechtwinkligen Polygon (*rectilinear polygon*) vervollständigen. Ein mögliches Ergebnis einer Unterteilung einer Karte in Teilgebiete ist exemplarisch in Fig. 4 dargestellt. Demnach wurde die Wohnung in verschiedene Zimmer unterteilt (z.B. Schlafzimmer 10 mit Bett, Flur 20, Wohnzimmer mit offenem Küchenbereich 30). Die Unterteilung der Wohnung in Teilgebiete 10, 20, 30 (Zimmer) wurde z.B. aufgrund detektierter Türdurchgänge vorgenommen. Von dem Teilgebiet 30 (Wohnzimmer mit offenem Küchenbereich) wurde basierend auf erkannten Bodenbelägen weiter die Teilgebiete 31 (Küchenbereich, gefliester Boden) und 32 (Teppichboden) abgeteilt (der verbleibende Teilgebiet 30 hat z.B. einen Parkettboden).

Wie bereits erwähnt wird in der Regel eine im Wesentlichen vollständige Karte des Robotereinsatzgebietes benötigt, bevor der Roboter eine sinnvolle automatische Unterteilung einer Karte in Teilgebiete (z.B. Zimmer) vornehmen kann. Bis dahin bewegt sich der Roboter durch das Roboter Einsatzgebiet, ohne Teilgebietsgrenzen beachten zu können. Dies kann zu ineffizienten und für einem Nutzer schwer nachvollziehbaren Verhalten des Roboters in der "Explorationsphase" führen. Beispielsweise passiert der Roboter einen Türdurchgang und kommt in einen weiteren Raum bevor er einen Raum vollständig erkundet hat, was dazu führen kann, dass der Roboter durch einen großen Teil des Robotereinsatzgebietes (z.B. einer Wohnung) gefahren ist, und dennoch an unterschiedlichen Stellen der Wohnung (in unterschiedlichen Zimmern) "weiße Flecken" in der Karte bleiben. Der Roboter muss schließlich diese "weißen Flecken" in der Karte einzeln anfahren, um diese zu erkunden und eine vollständige Karte zu erhalten. Die hier beschriebenen Ausführungsbeispiele betreffen unter anderem ein Verfahren, welches zumindest in einigen Situationen die erwähnte Explorationsphase effizienter gestaltet das Verhalten des Roboters in dieser Explorationsphase für einen Nutzer "logischer" erscheinen lässt.

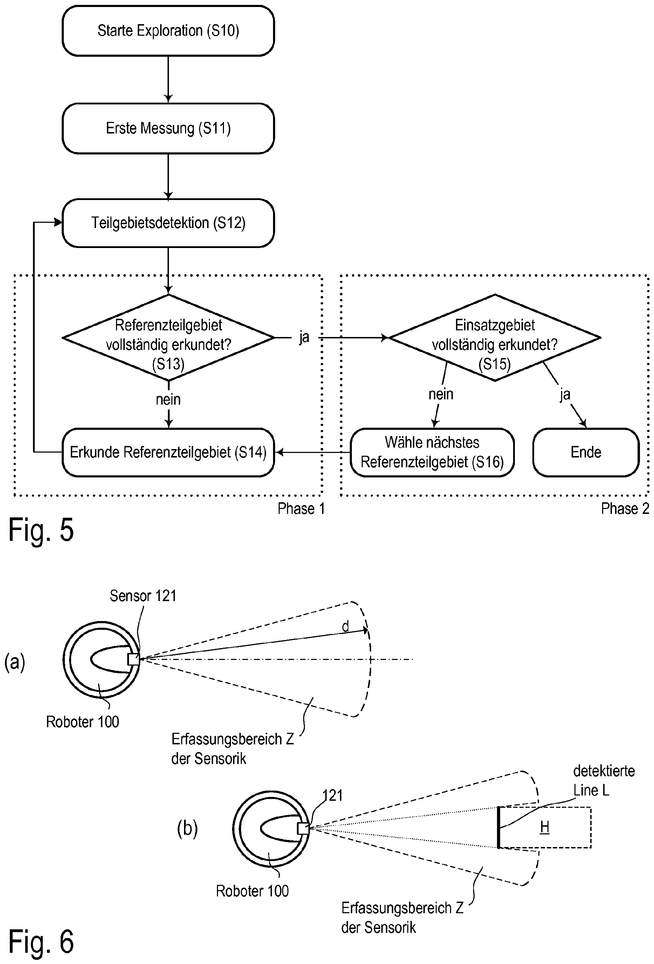

Figur 5 illustriert ein exemplarisches Beispiel eines Verfahrens zur Erkundung eines Robotereinsatzgebietes durch einen autonomen mobile Roboter (vgl. Fig. 1, Roboter 100). Eine Erkundungsfahrt kann an einem beliebigen Punkt im Robotereinsatzgebiet gestartet werden (Fig. 5, Schritt S10), und während der Erkundungsfahrt bewegt sich der Roboter durch das Robotereinsatzgebiet. Der Roboter hat am Anfang der Erkundungsfahrt keine oder nur sehr wenige Informationen über seine Umgebung. Die (elektronische) Karte des Roboters wird neu erstellt und ist somit mit Beginn der Erkundung praktisch leer. Der Roboter 100 führt während der Erkundungsfahrt laufend Messungen durch (Fig. 5, Schritt S11), um Objekte (z.B. Hindernisse, allgemein auch als Navigationsfeatures bezeichnet) in seiner Umgebung zu detektieren, und speichert detektierte Objekte als Kartendaten in einer Karte. Beispielsweise werden Wände und andere Hindernisse (z.B. Möbel und andere Gegenstände) detektiert und deren Position und Lage in der Karte gespeichert. Die für die Detektion verwendete Sensorik ist an sich bekannt und kann in einer Sensoreinheit 120 des Roboters 100 enthalten sein (vgl. Fig. 2). Für die Detektion notwendige Berechnungen können von einem in der Steuereinheit 150 (vgl. Fig. 2) des Roboters 100 enthaltenen Prozessor durchgeführt werden.

Während der Erkundungsfahrt führt der Roboter 100 basierend auf den aktuellen Kartendaten eine Teilgebietsdetektion durch (siehe Fig. 5, Schritt S12), wobei zumindest ein Referenzteilgebiet detektiert wird (z.B. ein Teil des Robotereinsatzgebietes, in dem der Roboter sich aktuell befindet). Des Weiteren wird geprüft, ob das Referenzteilgebiet vollständig erkundet ist (siehe Fig. 5, Schritt S13). Solange das nicht der Fall ist, erkundet der Roboter weiter (nur) das Referenzteilgebiet (siehe Fig. 5, Schritt S14), indem laufend Messungen durchgeführt werden, um Objekte in der Umgebung des Roboters zu detektieren und detektierte Objekte in der Karte zu speichern. Die Teilgebietsdetektion wird fortlaufend und/oder nach vorgebbaren Regeln wiederholt, um die Festlegung des Referenzteilgebietes zu aktualisieren. Anschließend prüft der Roboter erneut, ob das (aktualisierte) Referenzteilgebiet vollständig erkundet ist (zurück zu Schritt S13). Sobald die Prüfung ergibt, dass das (aktualisierte) Referenzteilgebiet vollständig erkundet ist, wird weiter geprüft, ob das Robotereinsatzgebiet schon vollständig erkundet ist (siehe Fig. 5, Schritt S15). Beispielsweise kann der Roboter bei einer Teilgebietsdetektion ein weiteres Teilgebiet detektiert haben, das noch nicht erkundet wurde. Daraus kann der Roboter schließen, dass die Erkundung des Robotereinsatzgebietes noch nicht vollständig ist und die Erkundung in einem anderen Teilgebiet fortsetzen (Fig. 5, Schritt S16), welches dann zum Referenzteilgebiet wird. Wenn der Roboter kein weiteres Teilgebiet mehr detektieren kann, welches noch nicht erkundet wurde, ist die Erkundung des Robotereinsatzgebietes abgeschlossen.

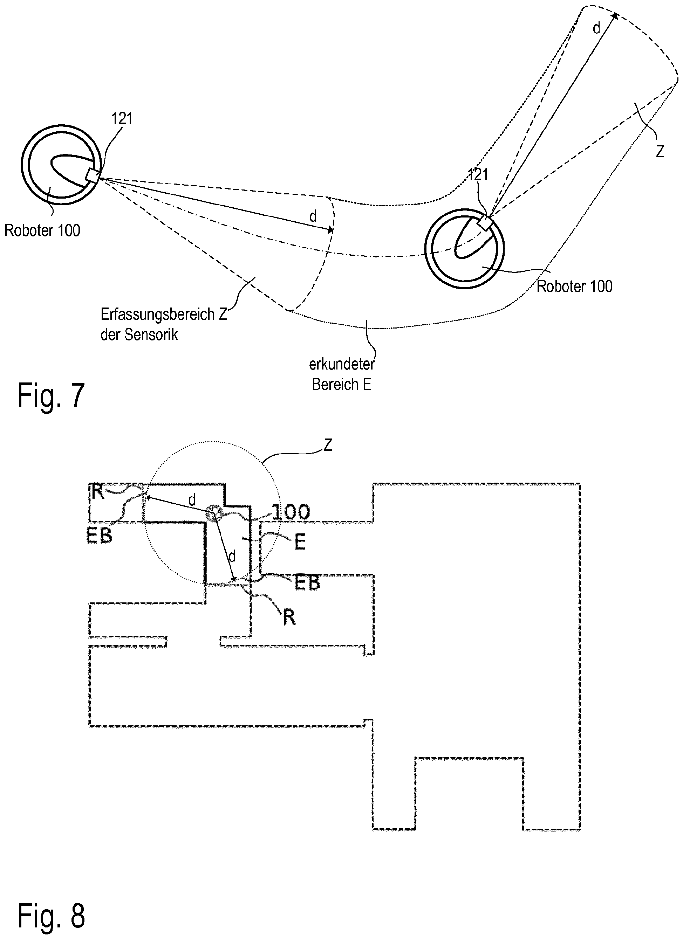

Zur Aktualisierung des Referenzteilgebietes werden bei der Teilgebietsdetektion sowohl die aktuellen Kartendaten als auch die bisherigen (d.h. bei einer früheren Teilgebietsdetektion festgelegten) Grenzen des Referenzteilgebietes berücksichtigt. Die laufende Aktualisierung des Referenzteilgebietes wird später noch genauer erläutert (vgl. Fig. 8 bis 10). Gemäß der Erfindung wird zur Aktualisierung des Referenzteilgebietes der bereits erkundete Teil des Robotereinsatzgebietes in ein oder mehrere Teilgebiete gegliedert, wobei aus den detektierten Teilgebieten das Referenzteilgebiet nach vordefinierten Kriterien ausgewählt wird. Wird nur ein einziges Teilgebiet detektiert, ist dieses das Referenzteilgebiet. Gemäß der Erfindung ist das Kriterium zur Auswahl des Referenzteilgebietes kann das Ausmaß der Überlappung mit dem zuvor (bei der vorhergehenden Teilgebietsdetektion) festgelegten Referenzteilgebiet. Das heißt, es wird aus den detektierten Teilgebieten jenes als aktuelles Referenzteilgebiet ausgewählt, welches mit dem zuvor ermittelten Referenzteilgebiet die größte Überlappung aufweist.

Algorithmen zur automatisierten Aufteilung einer Karte in Teilgebiete sind an sich bekannt. Einige dieser Algorithmen funktionieren nur, wenn die Karte vollständig erkundet, also durch Wände und andere Hindernisse vollständig eingeschlossen ist. Diese Algorithmen können für eine nicht-vollständig erkundete Karte genutzt werden, wenn die Karte "künstlich" abgeschlossen wird. Hierzu kann beispielsweise ein Rahmen (*bounding box*) um das bereits erkundete Gebiet gelegt werden, und als "virtuelles" Hindernis berücksichtigt werden. Auch andere Möglichkeiten, eine unvollständig erkundete Karte abzuschließen um die Algorithmen zur automatisierten Aufteilung einer vollständigen Karte zu nutzen, können alternative verwendet werden. In den hier beschriebenen Ausführungsbeispielen können für die Teilgebietsdetektion eine oder mehrere auf Kartendaten basierenden Informationen genutzt werden, beispielsweise die Position von Wänden und/oder anderen Hindernissen, die Position von Türdurchgängen und die Position von Bodenbelagsgrenzen. Zusätzlich oder alternativ können (z.B. in der Karte gespeicherte) Informationen über die Bodenstruktur, die Deckenstruktur und/oder die Wandstruktur berücksichtigt werden. Ein weiteres Kriterium für die Festlegung eines Teilgebiets sind vorgebbare geometrische Eigenschaften von Teilgebieten, wie beispielsweise eine minimale oder eine maximale Größe eines Teilgebiets. Deckenstrukturen und insbesondere die Ecken zwischen Decke und einer Wand können direkt Hinweise über die Form und Größe eines Raumes liefern. Hieraus können beispielsweise Türdurchgänge erkannt werden als Öffnungen in der Wand, die nicht bis an die Decke reichen. Wandstrukturen wie beispielsweise Fenster können Hinweise geben, ob es sich bei der besagten Wand um eine Außenwand handelt. Bodenstrukturen wie insbesondere der Wechsel des Bodenbelags oder eine Türschwelle können Indizien für Raumgrenzen und insbesondere für Türdurchgänge sein.

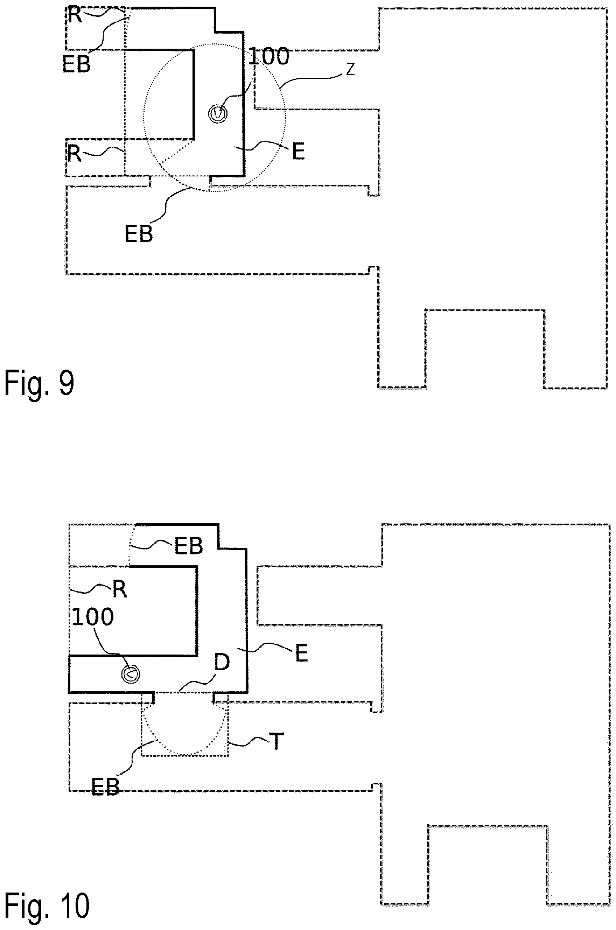

Je nach Implementierung der Teilbereichsdetektion können die Begrenzungslinien eines Teilgebietes zumindest teilweise prädiktiv ermittelt werden. In diesem Zusammenhang bedeutet prädiktiv, dass vorhandene, bereits detektierte und in der Karte gespeicherte Konturen (z.B. einer Wand) genutzt werden, um eine Begrenzungslinie eines Teilbereichs vorherzusagen. Beispielsweise kann eine bereits detektierte und in der Karte gespeicherte Kontur einer Wand (virtuell) geradlinig verlängert werden, um die Begrenzung eines Teilgebiets zu vervollständigen. Gemäß einem anderen Beispiel wird eine Begrenzungslinie eines Teilgebiets parallel oder rechtwinklig zu einer bereits detektierten und in der Karte gespeicherten Kontur einer Wand (oder eines anderen Hindernisses) so festgelegt, dass sie den Rand des bereits erkundeten Bereichs des Robotereinsatzgebietes berührt. Ein Beispiel hierfür wird später anhand Fig. 9 und 10 erläutert.

Der Roboter verfolgt (*tracking*) seine eigene Position in der Karte. Nach einer Teilgebietsdetektion kann der Roboter prüfen, ob er sich noch in dem (aktualisierten) Referenzteilgebiet befindet. Falls das nicht der Fall ist und falls das Referenzteilgebiet noch nicht vollständig erkundet ist, fährt der Roboter in das Referenzteilgebiet zurück, um dort die Erkundungsfahrt fortzusetzen. Die Erkundungsfahrt wird außerhalb des Referenzteilgebietes nicht fortgesetzt. Ergibt die Prüfung jedoch, dass das (aktualisierte) Referenzteilgebiet bereits vollständig erkundet wurde (beispielsweise weil es ausschließlich durch Konturen von Hindernissen oder Grenzlinien zu anderen detektierten Teilgebieten begrenzt ist) wird ein anderes Teilgebiet zum Referenzteilgebiet und die Erkundungsfahrt wird dort fortgesetzt.

Wie erwähnt kann die Teilgebietsdetektion regelmäßig oder als Reaktion auf die Detektion bestimmter Ereignisse wiederholt werden. Eine Wiederholung der Teilgebietsdetektion kann z.B. ausgelöst werden, wenn der Roboter feststellt, dass ein bestimmtes Zeitintervall ist seit der letzten Teilgebietsdetektion abgelaufen ist, dass der Roboter seit der letzten Teilgebietsdetektion eine bestimmte Wegstrecke zurückgelegt hat, dass seit der letzten Teilgebietsdetektion der erkundete Bereich des Robotereinsatzgebietes um eine bestimmte Fläche angewachsen ist oder dass der Aufwand für die weitere Erkundung des Referenzteilgebietes einen bestimmten Wert übersteigt. Der Aufwand kann z.B. mittels einer Kostenfunktion bewertet werden. Eine Wiederholung der Teilgebietsdetektion kann z.B. auch ausgelöst werden, wenn der Roboter einen für die Erkundung ermittelten Zielpunkt erreicht hat. Solch ein Zielpunkt kann beispielsweise auf der Grenze zwischen erkundetem und (noch) nicht-erkundetem Teilgebieten gewählt werden. Während der Roboter auf diesen Punkt zusteuert, kann er mit seinen Sensoren neue Bereiche erfassen und so die Grenzen des erkundeten Gebietes ausdehnen.

Wenn der Roboter feststellt, dass das Referenzteilgebiet vollständig erkundet wurde, dann wird es gespeichert und seine Grenzen werden später nicht mehr verändert. Solange noch weitere nicht vollständig erkundete Teilgebiete existieren, wählt der Roboter ein weiteres Teilgebiet als Referenzteilgebiet und setzt die Erkundungsfahrt dort fort. Das bisherige Referenzteilgebiet (oder die bisherigen Referenzteilgebiete) können bei der weiteren Teilgebietsdetektion dahingehend berücksichtigt werden, dass dessen (oder deren) Begrenzungslinien nicht mehr verändert werden und damit auch die Grenzen benachbarter Teilgebiete (zumindest teilweise) festgelegt sind. Das heißt, die Begrenzungslinien der bisherigen Referenzteilgebiete können bei der Ermittlung der Begrenzungslinien weiterer Teilgebiete berücksichtigt werden.

Falls der Roboter ein Reinigungsroboter ist, kann er - nachdem er ein Referenzteilgebiet vollständig erkundet hat - dieses reinigen, bevor ein weiteres Teilgebiet als Referenzgebiet gewählt und die Erkundungsfahrt dort fortgesetzt wird. Dieses Verhalten kann abhängig von einer Nutzereingabe gemacht werden, was die Flexibilität des Roboters erhöht. Der Roboter kann demnach eine Nutzereingabe entgegennehmen, abhängig von der der Roboter drei Betriebsmodi unterscheidet. Die Nutzereingabe (z.B. "erkunden", "erkunden und reinigen", "reinigen") kann beispielsweise über eine HMI erfolgen (z.B. auf einem portablen externen Gerät oder direkt am Roboter). In einem ersten Betriebsmodus führt der Roboter eine Erkundungsfahrt durch und erkundet der Roboter das Robotereinsatzgebiet und erstellt dabei eine neue Karte. Die Erkundungsfahrt kann gemäß den hier beschriebenen Verfahren implementiert sein. In einem zweiten Betriebsmodus führt der Roboter eine Erkundungsfahrt durch, erstellt dabei eine neue Karte und reinigt dabei auch das Robotereinsatzgebiet. In einem dritten Betriebsmodus wird keine neue Karte erstellt, sondern das Robotereinsatzgebiet basierend auf einer bereits existierenden, gespeicherten Karte gereinigt. Dieses Konzept kann auch auf andere Roboter übertragen werden, die keine Reinigungsroboter sind. In diesem Fall führt der Roboter statt der Reinigung eine andere Tätigkeit aus.

Der Roboter kann den bereits erkundeten Bereich des Robotereinsatzgebietes als "erkundet" in der Karte markieren (z.B. durch Setzen eines bestimmten Bits oder einer anderen Markierung, oder durch erfassen, aktualisieren und speichern der Grenze zwischen erkundeten und nicht-erkundeten Bereichen). Beispielsweise können jene Bereiche als erkundet in der Karte markiert werden, die während der Erkundungsfahrt zumindest einmal innerhalb eines Erfassungsbereichs eines Navigationssensors des Roboters gelegen sind (vgl. Fig. 7). Der Roboter kann üblicherweise mittels des Navigationssensors innerhalb des Erfassungsbereichs des Navigationssensors Objekte detektieren, beispielsweise indem berührungslos der Abstand zwischen Navigationssensor und mehreren Punkten eines Objekts gemessen wird (vgl. Fig. 6).

Der Roboter kann die Erkundungsfahrt beenden, wenn er feststellt, dass das Einsatzgebiet vollständig erkundet wurde (z.B. weil der als erkundet markierte Bereich vollständig von Hindernissen begrenzt ist) und/oder falls ein Fortsetzen der Erkundungsfahrt nicht möglich ist, weil kein weiteres (noch nicht vollständig erkundetes) Teilgebiet mehr detektiert wurde. In dieser Situation kann der Roboter erneut eine Teilgebietsdetektion durchführen und dabei die Kartendaten betreffend das vollständig erkundete Robotereinsatzgebiet berücksichtigen. Bei dieser abschließenden Teilbereichsdetektion kann der Roboter andere (z.B. genauere und/oder aufwändigere) Algorithmen verwenden als bei der wiederholt durchgeführten Teilbereichsdetektion während der Erkundungsfahrt. Alternativ kann der gleiche Algorithmus jedoch mit veränderten Parametern verwendet werden. Schließlich kann der Roboter nach Beenden der Erkundungsfahrt zu einem Ausgangspunkt zurückkehren, an dem die Erkundungsfahrt gestartet wurde, oder zu einer Basisstation, die während der Erkundungsfahrt detektiert und in der Karte gespeichert wurde.

Die Diagramme in Figur 6 illustrieren exemplarisch wie ein autonomer mobiler Roboter 100 seine Umgebung erkundet. In dem dargestellten Beispiel weist die Sensoreinheit 120 des Roboters 100 (siehe Fig. 2) einen Navigationssensor 121 auf, der einen definierten Erfassungsbereich Z (*coverage area*) abdeckt. Im dargestellten Beispiel hat der Erfassungsbereich Z näherungsweise die Form eines Kreissektors mit dem Radius d. Diese Situation ist in Diagramm (a) der Fig. 6 dargestellt. Der Navigationssensor 121 ist dazu ausgebildet, Objekte (z.B. Hindernisse, Möbel und andere Gegenstände) in der Umgebung des Roboters 100 zu detektieren, indem er den Abstand zur Kontur eines Objekts misst, sobald ein Objekt innerhalb des Erfassungsbereichs Z des Sensors 121 liegt. Der Erfassungsbereich Z bewegt sich mit dem Roboter mit, und der Erfassungsbereich Z kann Objekte überlappen, wenn der Roboter ihnen näher kommt als die Distanz d. Diagramm (b) der Fig. 6 zeigt eine Situation, in der ein Hindernis H sich innerhalb des Erfassungsbereichs Z des Navigationssensors 121 des Roboters befindet. Der Roboter kann einen Teil der Kontur des Hindernisses H erkennen, im vorliegenden Beispiel ist das die Linie L auf der dem Sensor 121 zugewandten Seite des Hindernisses H. Die Linie L wird in der Karte gespeichert. Im Laufe der Erkundungsfahrt wird der Roboter das Hindernis H noch aus anderen Blickrichtungen detektieren, und so die Kontur des Hindernisses in der Karte vervollständigen können. In dem dargestellten Beispiel hat der Erfassungsbereich Z der Sensorik ein vergleichsweise kleines Blickfeld. Es gibt jedoch auch Sensoren, welche in der Lage sind, einen Bereich von 360° abzudecken. In diesem Fall, hat der Erfassungsbereich Z die Form eines (vollständigen) Kreises. Auch weitere Erfassungsbereiche sind je nach Sensor möglich und an sich bekannt. Insbesondere kann der Erfassungsbereich speziell bei Sensoren zur dreidimensionalen Erfassung der Umgebung ein Volumen wie beispielsweise ein Öffnungskegel sein.

Der Roboter 100 kennt in der Regel seine eigene Position in der Karte; Veränderungen seiner Position kann der Roboter 100 beispielsweise mittels Odometrie (z.B. mittels Radsensoren, visueller Odometrie, etc) messen. Somit "weiß" der Roboter auch, welche Bereiche des Robotereinsatzgebietes er bereits erkundet hat und kann diese erkundeten Bereiche in der Karte als "erkundet" markieren. In dem in Fig. 7 dargestellten Beispiel umfasst der erkundete Bereich E alle Punkte des Robotereinsatzgebietes, die sich während der Erkundungsfahrt zumindest einmal in dem (mit dem Roboter 100 mitbewegten) Erfassungsbereich Z befunden haben. Die nicht als erkundet markierten Bereiche der Karte können als "weiße Flecken" betrachtet werden, über die dem Roboter (noch) keine Informationen vorliegen. Es sei an dieser Stelle noch angemerkt, dass ein in dem Erfassungsbereich Z befindliches Objekt H einen Teil des Erfassungsbereichs abschattet und diesen effektiv kleiner machen (siehe Diagramm (b) in Fig. 6).

Die Figuren 8 bis 10 illustrieren die fortschreitende Erkundung eines Robotereinsatzgebietes mit mehreren Zimmern. Figur 8 zeigt eine Situation kurz nach dem Beginn einer Erkundungsfahrt. Das dargestellte Robotereinsatzgebiet entspricht dem aus den Fig. 3 und 4. In dem vorliegenden Beispiel startet die Erkundungsfahrt in dem in der Darstellung oberen Bereich des Schlafzimmers (vgl. Fig. 4, Raum 10). Der einfach halber wird angenommen, dass der Erfassungsbereich Z des Navigationssensors 121 360° abdeckt und daher kreisförmig ist. Der mit Z bezeichnete Kreis kennzeichnet den theoretischen maximalen Erfassungsbereich des Sensors 121. Dementsprechend ist die Begrenzung EB des erkundeten Bereichs E durch die erkannten Hindernisse um den Roboter herum und zwei Kreisbögen gegeben.

Der Roboter 100 kann nun eine Teilgebietsdetektion durchführen, um ein erstes Referenzteilgebiet R (bzw. dessen Grenzen) festzulegen. Das Referenzteilgebiet R ist beispielsweise zum einen durch die erkannten Hindernisse begrenzt. Zum zweiten werden zwei virtuelle vorläufige Begrenzungslinien definiert. Da es für ihre Lage keine weiteren Anhaltspunkte gibt, werden sie beispielsweise als Geraden festgelegt, die orthogonal zu den erkannten Hindernissen liegen, welche die Begrenzung EB des erkundeten Bereichs E berühren (siehe Fig. 8, waagerecht und senkrecht liegende gestrichelte Tangenten an die Kreisbögen EB).

Um das Referenzteilgebiet weiter zu erkunden kann der Roboter beispielsweise versuchen zu einer der Begrenzungslinien des erkundeten Bereichs EB hin zu fahren, die nicht durch ein detektiertes Hindernis (z.B. Wand, Bett, Kommode, etc.) gebildet werden. Im vorliegenden Beispiel fährt der Roboter nach unten in den auf der Karte unten liegenden Bereich des Zimmers 10 während er weiter laufend Messungen durchführt und Hindernisse in seiner Umgebung detektiert und in seiner Karte speichert. Diese Situation ist in Fig. 9 dargestellt. Wie man in Fig. 9 sehen kann, hat sich im vgl. zur Fig. 8 der erkundete Bereich E vergrößert, wobei eine Ecke der Wand links neben dem Roboter das Sichtfeld des Sensors 121 des Roboters 100 teilweise abschattet. In der dargestellten Situation liegt ein Teil eines Türdurchgangs (hin zum Flur 20) bereits in dem erkundeten Gebiet E. Bei einer erneuten Teilgebietsdetektion ergeben sich andere Grenzen für das Referenzteilgebiet R. Bei der Teilgebietsdetektion können weitere, vordefinierte Annahmen einfließen, beispielswiese die Annahme, dass ein Zimmer eine im Wesentlichen rechteckige Grundfläche aufweist. Gemäß Fig. 9 werden die Begrenzungslinien so gewählt, dass das Referenzteilgebiet eine im Wesentlichen rechteckige Fläche ist, welche den Großteil des erkundeten Gebiets beinhaltet. Die untere Begrenzungslinie des Referenzteilgebiets R (waagrechte gestrichelte Linie in Fig. 9) wird beispielsweise generiert, indem die Kontur der Wand verlängert wird. Die linke Begrenzungslinie des Referenzteilgebiets R (senkrechte gestrichelte Linie in Fig. 9) wird beispielsweise rechtwinklig dazu festgelegt, so dass keine Begrenzungslinie des erkundeten Bereichs EB diese schneidet (sondern nur im oberen Bereich berührt).

Aufgrund der Festlegung des Referenzteilgebietes R fährt der Roboter 100 nun nicht durch den Türdurchgang in das benachbarte Zimmer, denn damit würde er ja das Referenzteilgebiet verlassen. Stattdessen bleibt der Roboter 100 in dem Referenzteilgebiet R und erkundet den zuvor noch nicht erkundeten Bereich (weißer Fleck) links unten (in der Karte) und das erkundete Gebiet E wächst weiter an und umfasst nun beinahe das gesamte Zimmer (siehe Fig. 2, Schlafzimmer 10). Diese Situation ist in Fig. 10 dargestellt. Bei der erneuten Teilgebietsdetektion erkennt der Roboter 100 den Türdurchgang zum benachbarten Zimmer (siehe Fig. 4, Flur 20), der als Linie D in die Karte eingetragen ist und zur Festlegung einer Begrenzungslinie zwischen zwei Teilgebieten genutzt wird. Deshalb wird der Roboter den bereits erkundeten Bereich auf der anderen Seite der Linie D einem weiteren (neuen, bisher noch nicht detektierten) Teilgebiet T zuordnen. In der in Fig. 10 dargestellten Situation liefert die Teilgebietsdetektion also zwei Teilgebiete, das Referenzteilgebiet R und das weitere Teilgebiet T.

Ausgehend von der in Fig. 10 dargestellten Situation wird der Roboter nicht direkt in das nächste Teilgebiet T fahren (obwohl es sehr nahe beim Roboter 100 liegt), um dort die Erkundung fortzusetzen, sondern zunächst den im Referenzgebiet R noch vorhandenen "weißen Fleck" (in der Karte links oben) erkunden. Danach wird der Roboter feststellen, dass das Referenzteilgebiet R vollständig erkundet ist, da es ausschließlich von Hindernissen (z.B. Wänden, Möbel, etc.) oder einer Begrenzungslinie zwischen zwei Teilgebieten (der Linie D, Türdurchgang) begrenzt ist. Erst danach fährt der Roboter in das weitere Teilgebiet T, welches als neues Referenzteilgebiet definiert wird, und setzt dort seine Erkundungsfahrt fort.

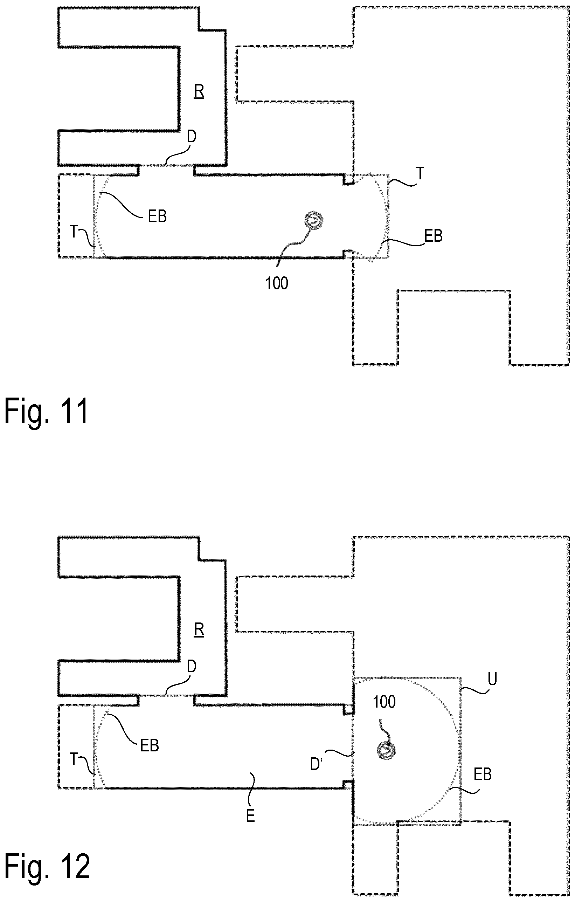

Fig. 11 zeigt den Roboter 100 bei der Erkundung des Teilgebiets T, welches nun das Referenzteilgebiet ist. Nachdem der Roboter 100 durch den Türdurchgang durchgefahren ist, ist er in dem dargestellten Beispiel links abgebogen und dem Flur (vgl. Fig. 4, Flur 20) in Richtung des Wohnzimmers (vgl. Fig. 4, Wohnzimmer 30) gefolgt. In Fig. 11 sind wieder die Grenzen EB des erkundeten Bereichs E dargestellt sowie die bei der Teilbereichsdetektion festgelegten (aktualisierten) Grenzen des Referenzteilgebietes T. Die Begrenzungslinien auf der rechten und linken Seite des Referenzteilgebietes T sind gerade Linien, welche rechtwinklig zu einer detektierten Wand verlaufen und die Grenzen EB des erkundeten Bereichs tangieren. In der Darstellung gemäß Fig. 11 erstreckt sich der erkundete Bereich E bereits in das benachbarte Zimmer (vgl. Fig. 4, Wohnzimmer 30), wobei der Roboter 100 den Türdurchgang zum Wohnzimmer noch nicht als solchen erkannt hat. Deshalb setzt der Roboter 100 die Erkundungsfahrt bis in das benachbarte Zimmer hinein fort und kommt in eine Situation, die in Fig. 11 dargestellt ist.

In dem in Fig. 11 dargestellten Beispiel erkennt der Roboter 100 den Türdurchgang D` erst, nachdem er durch diesen durchgefahren ist. Eine anschließende Teilgebietsdetektion führt (aufgrund des nun erkannten Türdurchgangs D') zu der Detektion eines weiteren Teilgebietes U. In dieser Situation kann der Roboter erkennen, dass er sich nicht mehr im Referenzteilgebiet T befindet, obwohl dieses noch nicht vollständig erkundet ist (links ist das Referenzteilgebiet noch nicht durch ein detektiertes Hindernis oder ein weiteres bereits erkanntes Teilgebiet begrenzt und deshalb unvollständig erkundet). Der Roboter 100 wird also in das Referenzteilgebiet T zurückfahren und dieses weiter erkunden.

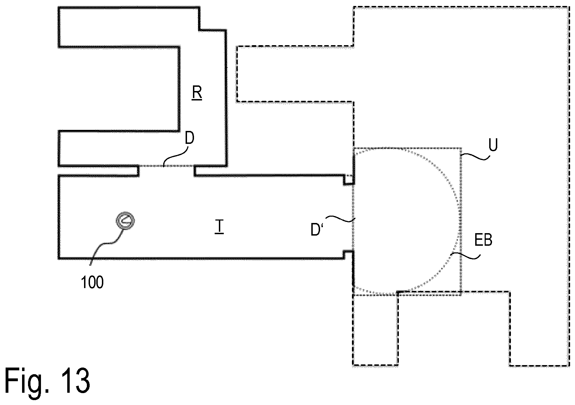

In der in Fig. 13 dargestellten Situation hat der Roboter 100 auch den linken Bereich des Referenzteilgebietes T erkundet, und der Roboter wird detektieren, dass das Referenzteilgebiet T nun vollständig erkundet ist, da es ausschließlich von detektierten Konturen von Hindernissen (Wänden) und detektierten benachbarten Teilgebieten R und U begrenzt wird. Ausgehend von der in Fig. 13 dargestellten Situation wird der Roboter nun das Teilgebiet U als neues Referenzteilgebiet wählen (weil dieses noch nicht vollständig erkundet ist) und die Erkundungsfahrt dort fortsetzen.

In einer einfachen Variante des hier beschriebenen Verfahrens ist die Teilgebietsdetektion reduziert auf eine Detektion der Türdurchgänge. Die Detektion eines (offenen) Türdurchganges impliziert die Detektion eines benachbarten Raumes. Das heißt, die Teilgebietsdetektion detektiert während der Erkundungsfahrt praktisch nur verschiedene Räume als unterschiedliche Teilgebiete. Im Übrigen ist dieses Ausführungsbeispiel gleich oder ähnlich zu den zuvor beschriebenen Ausführungsbeispielen. Der Roboter wird erst einen Raum vollständig erkunden, bevor er einen Türdurchgang durchfährt, um die Erkundungsfahrt in einem benachbarten Raum fortzusetzen. Sofern der Roboter zufällig in einen Benachbarten Raum fährt, beispielsweise weil ein Türdurchgang erst als solcher erkannt wird, nachdem der Roboter diesen Türdurchgang als solchen detektiert hat, kann der Roboter feststellen, dass er den zuvor erkundeten Raum verlassen hat, obwohl dieser noch nicht vollständig erkundet ist. In dieser Situation wird der Roboter die Erkundungsfahrt in dem Raum, in dem er sich aktuell befindet, beenden und den zuvor zufällig durchfahrenen Türdurchgang nochmal (in die entgegengesetzte Richtung) durchfahren, auf diese Weise in den zuvor erkundeten Raum zurückkehren und dieser weiter erkunden.

Die hier beschriebenen Verfahren können in Form von Software implementiert sein. Die Software kann auf einem Roboter, auf einem Mensch-Maschine-Schnittstelle (*human-machine interface,* HMI) und/oder auf einem beliebigen anderen Computer wie insbesondere einem Home-Server oder einem Cloud-Server ausgeführt werden. Insbesondere können einzelne Teile des Verfahrens mittels Software implementiert sein, die in verschieden Softwaremodule unterteilt sein kann und die auf verschiedenen Geräten ausgeführt werden können. Wenn der Roboter "etwas macht" (z.B. einen Verfahrensschritt ausführt) kann dieser Vorgang (z.B. Verfahrensschritt) von der Steuereinheit 150 initiiert worden sein (vgl. Fig. 2). Diese Steuereinheit 150 kann (ggf. zusammen mit anderen Einheiten) ein Steuergerät für den autonomen mobilen Roboter bilden, das sämtliche Funktionen und Verhaltensweisen des autonomen und mobilen Roboters steuert (unter anderem mit Hilfe anderer im Roboter vorhandener Einheiten und Module).

## Patentansprüche

1. Verfahren zur Erkundung eines Robotereinsatzgebietes durch einen autonomen mobilen Roboter (100), wobei das Verfahren umfasst:
Starten (S10) einer Erkundungsfahrt, wobei der Roboter (100) während der Erkundungsfahrt folgendes durchführt:
Detektieren (S11) von Objekten in der Umgebung des Roboters (100) und Speichern detektierter Objekte als Kartendaten in einer Karte, während der Roboter (100) sich durch das Robotereinsatzgebiet bewegt;
Durchführen (S12) einer Teilgebietsdetektion basierend auf den gespeicherten Kartendaten, wobei zumindest ein erstes Teilgebiet detektiert wird, das als aktuelles Referenzteilgebiet festgelegt wird;
Prüfen (S13), ob das aktuelle Referenzteilgebiet vollständig erkundet ist;
Laufendes Wiederholen der Teilgebietsdetektion (S12) zur Aktualisierung des aktuellen Referenzteilgebietes und Wiederholen der Prüfung (S13), ob das aktualisierte aktuelle Referenzteilgebiet vollständig erkundet ist, und Fortsetzen (S14) der Erkundung des aktualisierten aktuellen Referenzteilgebiets, bis dass die Prüfung ergibt, dass das aktualisierte aktuelle Referenzteilgebiet vollständig erkundet ist; und anschließend
Fortsetzen der Erkundungsfahrt in dem weiteren Teilgebiet, sofern ein weiteres Teilgebiet bei der Teilgebietsdetektion detektiert wurde (S15), wobei das weitere Teilgebiet als neues Referenzteilgebiet verwendet wird (S16),
wobei zur Aktualisierung des aktuellen Referenzteilgebietes die Teilgebietsdetektion sowohl die aktuellen Kartendaten als auch die bisherigen Grenzen des aktuellen Referenzteilgebietes berücksichtigt,
wobei zur Aktualisierung des aktuellen Referenzteilgebietes der Teil des Robotereinsatzgebietes, der bereits erkundet wurde, in ein oder mehrere Teilgebiete gegliedert wird, wobei aus den detektierten Teilgebieten das neue Referenzteilgebiet nach vordefinierten Kriterien ausgewählt wird, und
**dadurch gekennzeichnet, dass**
aus den weiteren detektierten Teilgebieten jenes als neues Referenzteilgebiet ausgewählt wird, welches mit dem zuvor ermittelten aktuellen Referenzteilgebiet die größte Überlappung aufweist.

2. Das Verfahren gemäß Anspruch 1,
wobei für die Teilgebietsdetektion zumindest eine der folgenden auf den Kartendaten basierenden Informationen genutzt wird: Position von Wänden und/oder anderen Hindernissen, Position von Türdurchgängen, Bodenbelagsgrenzen, Bodenstruktur, Deckenstruktur, Wandstruktur, vorgebbare geometrische Eigenschaften eines Teilgebiets, wie beispielsweise eine minimale oder eine maximale Größe eines Teilgebiets.

3. Das Verfahren gemäß einem der Ansprüche 1 oder 2,
wobei bei der Teilgebietsdetektion die Begrenzungslinien eines Teilgebietes zumindest teilweise prädiktiv ermittelt werden, indem Konturen bereits erkannter Objekte verlängert und als Begrenzungslinien verwendet werden und/oder indem nach vordefinierten Kriterien ermittelte Geraden als Begrenzungslinien verwendet werden, die jenen Teil des Robotereinsatzgebietes, der bereits erkundet wurde, berühren.

4. Das Verfahren gemäß einem der Ansprüche 1 bis 3,
wobei der Roboter (100) nach einer Teilgebietsdetektion prüft, ob er sich noch in dem aktuellen Referenzteilgebiet befindet, und, falls nicht, er in dieses zurück fährt.

5. Das Verfahren gemäß einem der Ansprüche 1 bis 4,
wobei die Teilgebietsdetektion wiederholt wird, wenn der Roboter (100) zumindest eines der folgenden Ereignisse feststellt:
ein bestimmtes Zeitintervall ist seit der letzten Teilgebietsdetektion abgelaufen,
der Roboter (100) hat seit der letzten Teilgebietsdetektion eine bestimmte Wegstrecke zurückgelegt;
seit der letzten Teilgebietsdetektion ist der erkundete Bereich des Robotereinsatzgebietes um eine bestimmte Fläche angewachsen;
der Aufwand für die weitere Erkundung des Referenzteilgebietes übersteigt einen bestimmten Wert, wobei der Aufwand mit einer Kostenfunktion bewertet wird; und
der Roboter (100) hat einen für Erkundung ermittelten Zielpunkt erreicht.

6. Das Verfahren gemäß einem der Ansprüche 1 bis 5,
wobei ein Referenzteilgebiet gespeichert und nicht mehr verändert wird, nachdem der Roboter (100) festgestellt hat, dass es vollständig erkundet ist.

7. Das Verfahren gemäß Anspruch 6,
wobei, wenn die Erkundung in einem weiteren Teilgebiet als Referenzteilgebiet fortgesetzt wird, das bzw. die vorherigen Referenzteilgebiete bei der weiteren Teilgebietsdetektion dahingehend berücksichtigt werden, dass dessen bzw. deren Begrenzungslinien nicht mehr verändert und/oder dass dessen bzw. deren Begrenzungslinien für die Ermittlung von Begrenzungslinien weiterer Teilgebiete berücksichtigt werden.

8. Das Verfahren gemäß einem der Ansprüche 1 bis 7,
wobei der Roboter (100) ein Reinigungsroboter ist, und er ein Referenzteilgebiet reinigt, nachdem er festgestellt hat, dass es vollständig erkundet ist und bevor er die Erkundung in einem weiteren Teilgebiet als Referenzteilgebiet fortsetzt.

9. Das Verfahren gemäß einem der Ansprüche 1 bis 8,
wobei der Roboter (100) jene Bereiche des Roboterteilgebiets als erkundet in der Karte markiert, welche während der Erkundungsfahrt zumindest einmal innerhalb eines Erfassungsbereichs eines Navigationssensors (121) des Roboters (100) gelegen sind.

10. Das Verfahren gemäß Anspruch 9,
wobei der Roboter (100) mittels des Navigationssensors (121) innerhalb des Erfassungsbereichs des Navigationssensors (121) Objekte detektiert, indem berührungslos der Abstand zwischen Navigationssensor (121) und mehreren Punkten eines Objekts gemessen wird.

11. Das Verfahren gemäß einem der Ansprüche 1 bis 10, das weiter umfasst,
Beenden der Erkundungsfahrt, falls ein Fortsetzen der Erkundungsfahrt nicht möglich ist, weil kein weiteres Teilgebiet mehr detektiert wurde; und
erneutes Durchführen einer Teilgebietsdetektion basierend auf den Kartendaten betreffend das vollständig erkundete Robotereinsatzgebiet.

12. Das Verfahren gemäß einem der Ansprüche 1 bis 11, das weiter umfasst,
Beenden der Erkundungsfahrt, falls ein Fortsetzen der Erkundungsfahrt nicht möglich ist, weil kein weiteres Teilgebiet mehr detektiert wurde; und
Zurückkehren zu einem Ausgangspunkt, an dem der Roboter (100) gestartet ist oder Anfahren einer Basisstation, die während der Erkundungsfahrt detektiert wurde.

13. Das Verfahren gemäß einem der Ansprüche 1 bis 12, wobei
das Robotereinsatzgebiet mehrere Räume umfasst und die Erkundungsfahrt in einem ersten der mehreren Räume des Robotereinsatzgebietes startet,
das Durchführen einer Teilgebietsdetektion das Detektieren eines oder mehrerer Türdurchgänge umfasst, wobei der detektierte Türdurchgang zwei Räume des Robotereinsatzgebietes oder das Referenzteilgebiet und das weitere Teilgebiet verbindet,
das aktuelle Referenzteilgebiet zumindest einen Teil des ersten Raums umfasst und das weitere Teilgebiet zumindest einen Teils eines weiteren Raums der mehreren Räume des Robotereinsatzgebietes umfasst.

14. Verfahren zum Steuern eines autonomen mobilen Roboters (100), das folgendes umfasst:
Entgegennehmen einer Nutzereingabe durch den autonomen mobilen Roboter (100),
Festlegen eines Betriebsmodus nach Maßgabe der Nutzereingabe, wobei der Roboter (100) sich in einem Robotereinsatzgebiet befindet und
in einem ersten Betriebsmodus das Robotereinsatzgebiet gemäß einem Verfahren gemäß einem der Ansprüche 1 bis 16 erkundet und dabei eine Karte neu erstellt,
in einem zweiten Betriebsmodus das Robotereinsatzgebiet gemäß einem Verfahren gemäß einem der Ansprüche 1 bis 16 erkundet, dabei eine Karte neu erstellt und eine Tätigkeit durchführt, insbesondere das Robotereinsatzgebiet reinigt, und
in einem dritten Betriebsmodus in dem Robotereinsatzgebiet eine Tätigkeit durchführt, insbesondere das Robotereinsatzgebiet reinigt, wobei für die Navigation in dem Robotereinsatzgebiet eine zuvor erstellte und gespeicherte Karte verwendet wird.

15. Robotersteuergerät (150), das folgendes aufweist:
einen Speicher (156) zum Speichern von Softwareinstruktionen;
mindestens einen Prozessor (155), der dazu ausgebildet ist, die Softwareinstruktionen auszuführen, wobei der Prozessor (155), wenn die Softwareinstruktionen ausgeführt werden, das Robotersteuergerät (150) dazu veranlasst, ein Verfahren gemäß einem der Ansprüche 1 bis 14 auszuführen.

## Claims

1. A method of exploring a robot deployment area by an autonomous mobile robot (100), the method comprising:
starting (S10) an exploratory trip, wherein the robot (100) carries out the following during the exploratory trip:
detecting (S11) objects in the environment of the robot (100), and storing detected objects as map data in a map while the robot (100) is moving through the robot deployment area;
carrying out (S12) a sub-area detection based on the stored map data, wherein at least a first sub-area is detected which is defined as a current reference sub-area;
checking (S13) whether the current reference sub-area has been fully explored;
continuously repeating the sub-area detection (S12) to update the current reference sub-area, and repeating the check (S13) as to whether the updated current reference sub-area has been fully explored, and continuing (S14) the exploration of the updated current reference sub-area until the check shows that the updated current reference sub-area has been fully explored; and then
continuing the exploratory trip in the further sub-area if a further sub-area was detected during the sub-area detection (S15), wherein the further sub-area is used as a new reference sub-area (S16),
wherein, to update the current reference sub-area, the sub-area detection takes into account both the current map data and the previous boundaries of the current reference sub-area, wherein, to update the current reference sub-area, the part of the robot deployment area that has already been explored is divided into one or more sub-areas, wherein the new reference sub-area is selected from the detected sub-areas according to predefined criteria, and
**characterized in that**, from the further detected sub-areas, that one is selected as the new reference sub-area which has the greatest overlap with the previously determined current reference sub-area.

2. The method according to claim 1,
wherein at least one of the following information based on the map data is used for the sub-area detection: position of walls and/or other obstacles, position of doorways, floor covering boundaries, floor structure, ceiling structure, wall structure, predeterminable geometric properties of a sub-area, such as a minimum or maximum size of a sub-area, for example.

3. The method according to any one of claims 1 or 2,
wherein, during the sub-are detection, the boundary lines of a sub-area are at least partially predictively determined by extending contours of objects already recognized and using them as boundary lines and/or by using straight lines determined according to predefined criteria as boundary lines contacting that part of the robot deployment area which has already been explored.

4. The method according to any of claims 1 to 3,
wherein, after a sub-area detection, the robot (100) checks whether it is still in the current reference sub-area and, if not, moves back into it.

5. The method according to any of claims 1 to 4,
wherein the sub-area detection is repeated if the robot (100) identifies at least one of the following events:
a certain time interval has elapsed since the last sub-area detection,
the robot (100) has covered a certain distance since the last sub-area detection;
since the last sub-area detection, the explored section of the robot deployment area has increased by a certain surface area;
the effort of further exploration of the reference sub-area exceeds a certain value, wherein the effort is evaluated using a cost function; and
the robot (100) has reached a target point determined for exploration.

6. The method according to any of claims 1 to 5,
wherein a reference sub-area is stored and remains unchanged after the robot (100) has found that it has been fully explored.

7. The method according to claim 6,
where, if the exploration is continued in a further sub-area as a reference sub-area, the previous reference sub-area(s) is/are taken into account in the further sub-area detection to the effect that its/their boundary lines remain unchanged and/or that its/their boundary lines are taken into account in the determination of boundary lines of further sub-areas.

8. The method according to any of claims 1 to 7,
wherein the robot (100) is a cleaning robot and cleans a reference sub-area after finding that it has been fully explored and before continuing to explore a further sub-area as a reference sub-area.

9. The method according to any of claims 1 to 8,
wherein the robot (100) marks those sections of the robot sub-area on the map as explored which are located at least once within a coverage area of a navigation sensor (121) of the robot (100) during the exploratory trip.

10. The method according to claim 9,
wherein the robot (100) detects objects within the coverage area of the navigation sensor (121) by means of the navigation sensor (121) by contactlessly measuring the distance between the navigation sensor (121) and multiple points of an object.

11. The method according to any of claims 1 to 10, further comprising
terminating the exploratory trip if it is not possible to continue the exploratory trip because no further sub-area was detected; and
carrying out a sub-area detection once again based on the map data relating to the fully explored robot deployment area.

12. The method according to any of claims 1 to 11, further comprising
terminating the exploratory trip if it is not possible to continue the exploratory trip because no further sub-area was detected; and
returning to a starting point where the robot (100) started or driving to a base station detected during the exploratory trip.

13. The method according to any of claims 1 to 12, wherein the robot deployment area comprises multiple spaces and the exploratory trip starts in a first of the multiple spaces of the robot deployment area,
the carrying out of a sub-area detection comprises detecting one or more doorways, wherein the detected doorway connects two spaces of the robot deployment area or the reference sub-area and the further sub-area,
the current reference sub-area comprises at least part of the first space and the further sub-area comprises at least part of a further space of the multiple spaces of the robot deployment area.

14. A method of controlling an autonomous mobile robot (100), comprising:
receiving a user input by the autonomous mobile robot (100),
defining an operating mode based on the user input, wherein the robot (100) is located in a robot deployment area, and
in a first operating mode, the robot deployment area is explored according to a method according to any one of claims 1 to 16 and a new map is created in the process,
in a second operating mode, the robot deployment area is explored using a method according to any one of claims 1 to 16, a new map is created in the process and an activity is carried out, in particular cleaning of the robot deployment area, and
in a third operating mode, an activity is carried out in the robot deployment area, in particular cleaning of the robot deployment area, wherein a previously created and stored map is used for navigation in the robot deployment area.

15. A robot controller (150), having:
a memory (156) for storing software instructions;
at least one processor (155), configured to execute the software instructions, wherein the processor (155), when executing the software instructions, causes the robot controller (150) to execute a method according to any one of claims 1 to 14.

## Revendications

1. Procédé d'exploration d'une zone d'intervention du robot à l'aide d'un robot mobile autonome (100), dans lequel le procédé comprend :
le démarrage (S10) d'un voyage d'exploration, dans lequel le robot (100) effectue les étapes suivantes pendant le voyage d'exploration :
détecter (S11) des objets autour du robot (100) et stocker des objets détectés sous forme de données cartographiques dans une carte pendant que le robot (100) se déplace dans la zone d'intervention du robot ;
effectuer (S12) une détection de secteur sur la base des données cartographiques stockées, dans lequel au moins un premier secteur, qui est défini comme le secteur de référence actuel, est détecté ;
vérifier (S13) si le secteur de référence actuel est entièrement exploré ;
répéter en continu la détection de secteur (S12) pour mettre à jour le secteur de référence actuel et répéter la vérification (S13) pour déterminer si le secteur de référence actuel mis à jour a été entièrement exploré, et poursuivre (S14) l'exploration du secteur de référence actuel mis à jour jusqu'à ce que la vérification indique que le secteur de référence actuel mis à jour est entièrement exploré ; et ensuite
la poursuite du voyage d'exploration dans un autre secteur dans la mesure où un autre secteur a été détecté pendant la détection de secteur (S15), dans lequel l'autre secteur est utilisé comme nouveau secteur de référence (S16),
dans lequel, pour mettre à jour le secteur de référence actuel, la détection de secteur prend en compte aussi bien les données cartographiques actuelles que les limites actuelles du secteur de référence actuel,
dans lequel, pour mettre à jour le secteur de référence actuel, la zone d'intervention du robot qui a déjà été explorée est divisée en un ou plusieurs secteurs, dans lequel le nouveau secteur de référence est choisi parmi les secteurs détectés selon des critères prédéfinis, et
**caractérisé en ce que**, parmi les autres secteurs détectés, l'on sélectionne comme nouveau secteur de référence celui qui présente le plus grand chevauchement avec le secteur de référence actuel déterminé auparavant.

2. Procédé selon la revendication 1,
dans lequel au moins l'une des autres informations basées sur les données cartographiques est utilisée pour la détection de secteur : la position des murs et/ou d'autres obstacles, la position des portes, les limites du revêtement de sol, la structure du sol, la structure du plafond, la structure des murs, les propriétés géométriques prédéfinies d'un secteur, telles qu'une taille minimale ou maximale d'un secteur.

3. Procédé selon l'une des revendications 1 ou 2,
dans lequel les lignes de délimitation d'un secteur sont déterminées au moins partiellement de manière prédictive dans une détection de secteur, en prolongeant les contours d'objets déjà reconnus et en les utilisant comme lignes de délimitation et/ou en utilisant des lignes droites déterminées selon des critères prédéfinis comme lignes de délimitation qui touchent la partie de la zone d'intervention du robot qui a déjà été explorée.

4. Procédé selon l'une des revendications 1 à 3,
dans lequel le robot (100) vérifie une détection de secteur s'il se trouve toujours dans le secteur de référence actuel et, si ce n'est pas le cas, il y retourne.

5. Procédé selon l'une des revendications 1 à 4,
dans lequel la détection de secteur est répétée lorsque le robot (100) constate au moins l'un des événements suivants :
un certain intervalle de temps s'est écoulé depuis la dernière détection de secteur,
le robot (100) a parcouru une certaine distance depuis la dernière détection de secteur ;
depuis la dernière détection de secteur, le secteur exploré de la zone d'intervention du robot a augmenté d'une certaine superficie ;
l'effort pour poursuivre l'exploration du secteur de référence dépasse une certaine valeur, dans lequel l'effort est évalué avec une fonction de coût ; et
le robot (100) a atteint un point cible déterminé pour l'exploration.

6. Procédé selon l'une des revendications 1 à 5,
dans lequel un secteur de référence est stocké et n'est plus modifiable après que le robot (100) a constaté qu'il est entièrement exploré.

7. Procédé selon la revendication 6,
dans lequel, lorsque l'exploration se poursuit dans un autre secteur en tant que secteur de référence, le/les secteur(s) de référence précédent(s) est/sont pris en compte dans la détection d'un autre secteur de sorte que ses/leurs lignes de délimitation ne changent plus et/ou que ses/leurs lignes de délimitation sont prises en compte pour la détermination des lignes de délimitation d'autres secteurs.

8. Procédé selon l'une des revendications 1 à 7,
dans lequel le robot (100) est un robot de nettoyage et il nettoie un secteur de référence après avoir constaté qu'il est entièrement exploré et avant de continuer à explorer un autre secteur en tant que secteur de référence.

9. Procédé selon l'une des revendications 1 à 8,
dans lequel le robot (100) marque les zones du secteur du robot comme explorées sur la carte qui sont situées au moins une fois dans une plage de détection d'un capteur de navigation (121) du robot (100) pendant le voyage d'exploration.

10. Procédé selon la revendication 9,
dans lequel le robot (100) détecte à l'aide du capteur de navigation (121) des objets dans la plage de détection du capteur de navigation (121) en mesurant sans contact la distance entre le capteur de navigation (121) et une pluralité de points sur un objet.

11. Procédé selon l'une des revendications 1 à 10, qui comprend en outre
l'achèvement du voyage d'exploration s'il n'est pas possible de poursuivre le voyage d'exploration parce qu'aucun autre secteur n'a été détecté ; et
l'exécution d'une nouvelle détection de secteur sur la base des données cartographiques relatives à la zone d'intervention du robot entièrement explorée.

12. Procédé selon l'une des revendications 1 à 11, qui comprend en outre
l'achèvement du voyage d'exploration s'il n'est pas possible de poursuivre le voyage d'exploration parce qu'aucun autre secteur n'a été détecté ; et
le retour à un point de départ où le robot (100) a démarré ou un déplacement vers une station de base qui a été détectée pendant le voyage d'exploration.

13. Procédé selon l'une des revendications 1 à 12, dans lequel la zone d'intervention du robot comprend plusieurs salles et le voyage d'exploration commence dans une première de la pluralité de salles de la zone d'intervention du robot,
l'exécution d'une détection de secteur comprend la détection d'une ou plusieurs portes, dans lequel la porte détectée relie deux salles de la zone d'intervention du robot ou le secteur de référence et l'autre secteur,
le secteur de référence actuel comprend au moins une partie de la première salle et l'autre secteur comprend au moins une partie d'une autre salle de la pluralité de salles de la zone d'intervention du robot.

14. Procédé de commande d'un robot mobile autonome (100), qui comprend :
la réception d'une entrée utilisateur par le robot mobile autonome (100),
la définition d'un mode de fonctionnement en fonction de l'entrée utilisateur, dans lequel le robot (100) se trouve dans une zone d'intervention du robot et
dans un premier mode de fonctionnement, la zone d'intervention du robot est explorée selon un procédé selon l'une des revendications 1 à 16 et une nouvelle carte est créée dans le mode,
dans un deuxième mode de fonctionnement, la zone d'intervention du robot est explorée selon un procédé selon l'une des revendications 1 à 16, une nouvelle carte est créée et une activité est réalisée, notamment le nettoyage de la zone d'intervention du robot, et
dans un troisième mode de fonctionnement, une activité est effectuée dans la zone d'intervention du robot, notamment le nettoyage de la zone d'intervention du robot, dans lequel une carte préalablement créée et stockée est utilisée pour la navigation dans la zone d'intervention du robot.

15. Unité de commande du robot (150) comprenant :
une mémoire (156) pour stocker des instructions logicielles ;
au moins un processeur (155) adapté pour exécuter les instructions logicielles, dans laquelle le processeur (155), lorsque les instructions logicielles sont exécutées, fait en sorte que l'unité de commande du robot (150) exécute un procédé selon l'une des revendications 1 à 14.
